(19) Europäisches Patentamt
European Patent Office
Office européen des brevets

(11) **EP 4 386 882 A1**

(12) **EUROPEAN PATENT APPLICATION**
published in accordance with Art. 153(4) EPC

(43) Date of publication:
**19.06.2024 Bulletin 2024/25**

(21) Application number: **22916872.9**

(22) Date of filing: **20.05.2022**

(51) International Patent Classification (IPC):
**H01M 4/13** $^{(2010.01)}$  **H01M 4/62** $^{(2006.01)}$
**H01M 10/0525** $^{(2010.01)}$  **C01B 32/158** $^{(2017.01)}$

(52) Cooperative Patent Classification (CPC):
**C01B 32/158; H01M 4/13; H01M 4/62;
H01M 10/0525**

(86) International application number:
**PCT/RU2022/000170**

(87) International publication number:
**WO 2023/128802 (06.07.2023 Gazette 2023/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.12.2021 RU 2021139491**

(71) Applicant: **MCD Technologies S.a.r.l
3364 Leudelange (LU)**

(72) Inventors:
• **PREDTECHENSKIY, Mikhail Rudolfovich
Novosibirsk, 630008 (RU)**
• **KHASIN, Aleksandr Aleksandrovich
Moskva, 115035 (RU)**
• **BOBRENOK, Oleg Filippovich
Novosibirsk, 630058 (RU)**
• **KOSOLAPOV, Andrey Gennadievich
Novosibirsk, 630008 (RU)**

(74) Representative: **Dennemeyer & Associates S.A.
Postfach 70 04 25
81304 München (DE)**

(54) **CARBON NANOTUBE DISPERSION, CATHODE PASTE AND CATHODE**

(57)    A dispersion contains a solvent with most of the molecules being electrically neutral, hydrogenated nitrile butadiene rubber, and 0.2 to 2 wt.% of single-walled and/or double-walled carbon nanotubes, with a weight ratio of the single-walled and/or double-walled carbon nanotubes to the hydrogenated nitrile butadiene rubber at least 0.1 and not more than 10. A dispersion is provided that contains a solvent with most of the molecules being electrically neutral, hydrogenated nitrile butadiene rubber, and single-walled and/or double-walled carbon nanotubes with both high storage and transportation stability and low viscosity under various processes of its application, and producing a cathode slurry and then a lithium-ion battery cathode. A method for producing a dispersion, a method for producing a cathode slurry, a cathode slurry, a method for producing a cathode, and a cathode are also provided.

Fig. 5.

EP 4 386 882 A1

**Description**

**Field of the invention**

The invention relates to liquid dispersions of single-walled and/or double-walled carbon nanotubes and agglomerates thereof, these dispersions having both high stability and moderate viscosity. The invention also relates to methods for producing such dispersions. The invention also relates to the use of such dispersions to produce cathode slurries. The invention also relates to cathode slurries, and to methods for producing lithium-ion battery cathodes.

**Background of the related art**

Dispersions of single-walled and double-walled carbon nanotubes can be used to introduce these carbon nanomaterials into various coatings and composite materials, including cathode slurries for the production of lithium-ion battery cathodes. The presence of single-walled and double-walled carbon nanotubes in the cathodes of lithium-ion batteries can improve their technical characteristics: reduce internal resistance, increase specific capacity and number of charge cycles (i.e., increase the battery capacity after a certain number of charge-discharge cycles). However, single-walled and/or double-walled carbon nanotubes should be optimally dispersed and distributed in the lithium-ion battery cathode material to achieve this technical result.

Single-walled and double-walled carbon nanotubes tend to bundle and agglomerate to a more complex geometry. The agglomeration of carbon nanotubes into long and thick bundles is desirable in a number of implementations, including, for example, for ensuring high electrical conductivity of the cathode, but causes higher rate of sedimentation of dispersed carbon nanotube agglomerates, i.e., lower stability of the dispersion or the cathode slurry. Lower stability of a dispersion reduces the storage time of the dispersion, leads to limitations in possible logistics and technological schemes, increases the risk of non-homogeneous subsequent mixture with cathode slurry material and, as a result, the risk of rejects in the lithium-ion battery production. These risks are associated with lower stability of the cathode slurry containing single-walled and/or double-walled carbon nanotubes and agglomerates thereof to an even greater extent.

Methods are known in the art to improve the stability of dispersions by preventing the agglomeration of dispersed particles, such as carbon nanotubes, using dispersing agents and surfactants. For single-walled carbon nanotubes, chlorosulfonic acid is known, for example, to completely shift the equilibrium of the agglomeration process towards individual nanotubes [A.N.G. Parra-Vasquez, N. Behabtu, M.J. Green, C.L. Pint, C.C. Young, J. Schmidt, E. Kesselman, A. Goyal, P.M. Ajayan, Y. Cohen, Y. Talmon, R.H. Hauge, M. Pasquali, Spontaneous Dissolution of Ultralong Single- and Multiwalled Carbon Nanotubes, ACS Nano 2010 4 (7), pp. 3969-3978]. This approach, however, has a disadvantage in that long bundles of carbon nanotubes are reduced or eliminated in the dispersion, though their presence is advantageous in some implementations as they reduce the electrical percolation threshold and increase the electrical conductivity of a coating or a composite material (e.g., a lithium-ion battery cathode) obtained with this kind of dispersion.

On the other hand, dispersions of single-walled or double-walled carbon nanotubes are characterized by high viscosity, which grows with increasing concentration of nanotubes and their bundles, and their length-to-thickness ratio [A.N.G. Parra-Vasquez, J.G. Duque, M.J. Green, M. Pasquali, Assessment of length and bundle distribution of dilute single-walled carbon nanotubes by viscosity measurements, AIChE J., 60 (2014), pp. 1499-1508.]. Further agglomeration of carbon nanotube bundles into agglomerates of complex shapes leads to a very high viscosity of the dispersion, making further use of the dispersion technologically difficult, e.g., for coating or pumping through process lines in the production process.

At the same time, high viscosity of the dispersion reduces mobility of carbon nanotubes and their bundles, as well as the rate of sedimentation of agglomerates, and, thus, improves the stability of the dispersion. Conversely, the mobility and sedimentation rate of agglomerates are higher in dispersions with low viscosity. Hence, the choice of carbon nanotube dispersions is about finding a middle ground between high stability of the dispersion and its low viscosity.

Therefore, there is a technical problem of obtaining a dispersion in which high stability of the dispersion and opportunity of long-term storage without delamination and changes in properties would be combined with low viscosity necessary for the use of the dispersion, including in the processes of producing cathode slurry for lithium-ion batteries. There is a similar technical problem with the cathode slurry containing single-walled and/or double-walled carbon nanotubes: it is necessary to ensure its high viscosity during storage before use (application to the current collector of the cathode), high viscosity after the application to the current collector without spreading to ensure good quality of the edge of the active material layer of the cathode and, at the same time, low viscosity of the cathode slurry under the processing conditions defined for its application to the current collector.

There are solutions to produce high viscosity gels containing carbon nanotubes in a dispersed state. Patent publication WO2006112162 A1 proposes a gel, containing dispersed carbon nanotubes, based on an ionic liquid, such as obtained by the neutralization reaction of benzoic acid or its derivatives and a base. This gel containing carbon nanotubes provides the possibility of unlimited long-term storage without agglomeration of nanotube and sedimentation of their agglomerates. However, the use of the ionic liquid as a dispersion fluid restricts the dispersion applications greatly. In the vast majority of applications, including the production of cathode slurries, this gel cannot be used directly, and a dispersion based on an aqueous and/or organic solvent, predominantly containing electrically neutral molecules, should be obtained from it before use. The stability of this dispersion will no longer be ensured by the stability of the initial gel, and the stability of the cathode slurry will not be ensured, as well. Additionally, for many implementations, including the production of cathode slurries and lithium-ion battery cathodes, the initial components of the ionic liquid may be undesirable even after dilution and dispersion in a solvent.

Solutions are known in which the composition of the dispersion is selected, such that the viscosity of the dispersion and/or its complex modulus are in a narrow range, which is a middle ground between high viscosity necessary to preserve good quality of the carbon nanotube dispersion and low viscosity desired for good workability to transfer and convert this dispersion into the final product. For example, patent EP 3333946 B1 claims a dispersion of carbon nanotube bundles in a dispersion medium, the dispersion also containing hydrogenated nitrile butadiene rubber with 1 to 15 wt.% units obtained by hydrogenation of conjugated diene, the dispersion further characterized by a complex elastic modulus from 20 to 500 Pa at 1 Hz. The inventors of EP 3333946 B1 use a complex elastic modulus at 1 Hz as a measure of fluid viscosity: the fluid viscosity is too low at low complex elastic modulus; and the liquid viscosity is too high if complex elastic modulus is high, and the further production process (formation of electrodes) ceases to be technologically feasible. As described in the cited patent, the viscosity of the dispersion with the above complex elastic modulus is 2 to 20 Pa·s at a shear rate of 1/(6.3 s). EP 3333946 B1 does not aim to ensure high stability of the dispersion; however, limiting the viscosity below 20 Pa s is not sufficient for the dispersion to remain stable for a long time, which is a disadvantage that it prevents the efficient organization of the production process, including good storage and transportation of the dispersion. EP 3333946 B1 is selected as the Prototype.

Technical problem

Thus, there is a technical problem of obtaining a dispersion of single-walled and/or double-walled carbon nanotubes characterized by both high stability during storage and transportation and low viscosity of this dispersion under various technological processes of its use, including the production of the cathode slurry and then the cathode of the lithium-ion battery. There is a similar technical problem with the cathode slurry containing single-walled and/or double-walled carbon nanotubes: it is necessary to obtain a cathode slurry characterized by high viscosity during storage before use (application to the current collector of the cathode), high viscosity after the application to the current collector without spreading to ensure good quality on the edge of the active material layer of the cathode and, at the same time, low viscosity of the cathode slurry under the conditions of the technological process of its application to the current collector. As a result, there is a problem of producing a lithium-ion battery cathode of high quality which manifests itself in high specific capacity and stability of operation in successive charge-discharge cycles. Known solutions, including EP 3333946 B1, do not make it possible to resolve the technical problem.

**Summary of the invention**

To solve the technical problem, the dispersion at rest during storage should be a highly viscous fluid, i.e., the dispersion viscosity should be more than 20 Pa·s at a shear rate equal to or less than $1/6.3$ s$^{-1}$, which allows long-term storage and/or transportation of the dispersion without agglomeration and/or sedimentation of carbon nanotubes, and, at the same time, the dispersion viscosity in the process flow should be significantly lower: less than 2 Pa·s at a shear rate equal to or greater than 18.6 s$^{-1}$, i.e., that is low enough for the technological process, in which this dispersion applies, including the technological process of preparing cathode slurry. Hereinafter, the term "viscosity" refers to the dynamic viscosity at a temperature of 25 °C. The dispersion storage and application conditions may be characterized by a different temperature. Importantly, the values of typical shear rates during storage and transportation ($<1/6.3$ s$^{-1}$) and shear rates during processing ($>18.6$ s$^{-1}$), given here and used below, are not absolute, and they are taken as conventions for a quantitative description of the dispersion viscosities. The shear rates may exceed $1/6.3$ s$^{-1}$ for some transport conditions and may be below 18.6 s$^{-1}$ for some technological processes using the dispersion, which does not negate the benefits of the dispersion of the present invention.

The studies made by the inventors of the present application have shown that it is possible to produce dispersions of single-walled and double-walled carbon nanotubes and agglomerates thereof, which are non-ideal pseudoplastic fluids and follow the Ostwald-de Waele power law known for some non-ideal liquids [W. Ostwald, Ueber die rechnerische Darstellung des Strukturgebietes der Viskositat", Kolloid-Zeitschrift 47 (1929), pp. 176-187].

$$\mu_{\mathrm{eff}} = K\left(\frac{\partial u}{\partial y}\right)^{n-1}$$

(1)

In accordance with this law their viscosity depends on the shear rate in the liquid flow, i.e., the less the viscosity, the greater the shear rate. Pseudoplastic fluids are characterized by n < 1. The lower the flow behavior index n, the more pronounced the dependence of the pseudoplastic fluid viscosity on the shear rate. Further studies showed that the flow behavior index can be significantly reduced by adding a gelling agent into the dispersion of single-walled and/or double-walled carbon nanotubes, which can be used to achieve a particularly significant effect in organic solvents when using hydrogenated butadiene-nitrile rubber (HNBR, Hydrogenated acrylonitrile-butadiene rubber) as the gelling agent. Simultaneous introduction of HNBR and single-walled and/or double-walled carbon nanotubes gives a synergistic effect resulting in a lower flow behavior index n (i.e., a greater difference between the dispersion and the ideal Newtonian fluid), compared to the flow behavior indices for the corresponding dispersions of carbon nanotubes in a solvent and solution or suspension of HNBR in a solvent.

The synergistic effect results from the HNBR gel areas formed in the suspension, which are interbound by the bundles of single-walled and/or double-walled carbon nanotubes. The resultant network provides a very high dispersion viscosity at low shear loads; however, the intermolecular bonds between carbon nanotubes and HNBR molecules are weak enough so that any higher shear load destroys them and leads to a lower viscosity.

This disclosure provides a dispersion containing a solvent with most of the molecules being electrically neutral, hydrogenated nitrile butadiene rubber, and single-walled and/or double-walled carbon nanotubes, wherein the content of the single-walled and/or double-walled carbon nanotubes ranges from 0.2 to 2 wt.%, and the weight ratio of single-walled and/or double-walled carbon nanotubes to hydrogenated nitrile butadiene rubber is at least 0.1 and not more than 10.

A dispersion with this composition has the advantage of a very high dynamic viscosity of the dispersion at low shear rates (e.g., less than $1/6.3\ \mathrm{s}^{-1}$) and low dynamic viscosity at shear rates typical for the processing (e.g., more than $18.6\ \mathrm{s}^{-1}$) due to the synergistic effect on the viscosity of single-walled and/or double-walled carbon nanotubes and HNBR.

Hydrogenated nitrile butadiene rubber (HNBR) refers to a polymer obtained by hydrogenation of nitrile butadiene rubber, i.e., a polymer obtained by copolymerization of acetonitrile and butadiene. HNBR contains -CH2-CH(CN)- acetonitrile units, polybutadiene units, and hydrogenated polybutadiene units. The term "polybutadiene units" refers to $-CH_2-CH=CH-CH_2-$(1,4-polybutadiene units) or $>CH-CH=CH_2$ (1,2-polybutadiene units) polymer chain units, and the term "hydrogenated polybutadiene units" refers to $-CH_2-CH_2-CH_2-CH_2-$ or $>CH-CH_2-CH_3$ polymer chain units, respectively, i.e., saturated units obtained by hydrogenation of polybutadiene units. In some implementations, Therban® 3406 or Therban® 3404, for example, are preferably used as a completely hydrogenated rubber containing less than 1 wt.% of residual polybutadiene units. In some implementations it is preferable to use a partly hydrogenated rubber with a residual content of polybutadiene units of more than 3 wt.%, or more than 5 wt.%, or more than 17 wt.%, such as Therban® 3496.

A preferable content of hydrogenated polybutadiene units in HNBR is more than 15 wt.%. The most preferable content of hydrogenated polybutadiene units in HNBR is more than 40 wt.%.

In some cases, HNBR preferably contains more than 20 wt.% of acetonitrile units. In some cases, the viscosity of hydrogenated nitrile butadiene rubber $ML_{(1+4)}$100 °C is preferably less than 50 Mooney units. In some implementations, such low-viscosity nitrile butadiene rubber is preferably completely hydrogenated, i.e., contains less than 1 wt.% of residual polybutadiene units, e.g., Therban® 3404.

Presence of HNBR in the dispersion leads to higher flow consistency index K and lower flow behavior index n. Presence of single-walled and/or double-walled carbon nanotubes and/or agglomerates thereof in the dispersion also leads to an increase in the flow consistency index K and a decrease in the flow behavior index n. Simultaneous presence of HNBR and single-walled and/or double-walled carbon nanotubes and/or agglomerates thereof in the dispersion produces a synergistic effect expressed in a much lower flow behavior index n (i.e., a greater difference between the dispersion and the ideal Newtonian fluid), compared to the flow behavior indices for the corresponding dispersions of carbon nanotubes in a solvent and HNBR in a solvent.

The content of single-walled and/or double-walled carbon nanotubes in the dispersion which makes it possible to achieve the technical result is between 0.2 and 2 wt.%. The preferable content of single-walled and/or double-walled carbon nanotubes in the dispersion is determined by the technological equipment used and logistic features. Preferably, the content of single-walled and/or double-walled carbon nanotubes is from 0.3 to 1.4 wt.%. For some implementations, the content of single-walled and/or double-walled carbon nanotubes is preferably from 0.3 to 0.6 wt.%, most preferably from 0.35 to 0.45 wt.%. For some other implementations, the content of single-walled and/or double-walled carbon nanotubes in the dispersion is preferably from 0.6 to 1.2 wt.%, most preferably from 0.7 to 1 wt.%.

A preferable weight ratio of single-walled and/or double-walled carbon nanotubes to HNBR in the dispersion is at least 0.2 and not more than 5. The most preferable weight ratio of single-walled and/or double-walled carbon nanotubes to HNBR in the dispersion is at least 0.5 and not more than 3. However, the synergistic effect producing the technical result is also achievable with a weight ratio of single-walled and/or double-walled carbon nanotubes to HNBR in the dispersion in the range of 0.1 to 0.5. For some implementations, the most preferable weight ratio of single-walled and/or double-walled carbon nanotubes to HNBR in the dispersion is at least 0.5 and not more than 5. The synergistic effect producing the technical result is also achievable with a weight ratio of single-walled and/or double-walled carbon nanotubes to HNBR in the dispersion in the range of 3 to 10.

The presence of single-walled and/or double-walled carbon nanotubes in the dispersion is an important condition for achieving technical result. Single-walled carbon nanotubes are known to have a small diameter, which is less than 4 nm, e.g., 1.5 nm, for stable single-walled carbon nanotubes, and, at the same time, a great length that can exceed 5 $\mu$m. Thus, single-walled carbon nanotubes have a very large length-to-diameter ratio that can exceed 3000. Double-walled carbon nanotubes are also known to have an outer diameter that does not exceed 6 nm, e.g., it can be 2.8 nm, and their length can also exceed 5 $\mu$m. Agglomerating single-walled and/or double-walled carbon nanotubes can form agglomerates with a length-to-diameter ratio that is either somewhat smaller or larger than that of individual nanotubes contained therein. Preferably, the single-walled and/or double-walled carbon nanotube agglomerates contain bundles of single-walled and/or double-walled carbon nanotubes with a length-to-diameter ratio greater than 100, more preferably with the length-to-diameter ratio of single-walled and/or double-walled carbon nanotubes greater than 500, and most preferably with the length-to-diameter ratio of single-walled and/or double-walled carbon nanotubes greater than 1000.

The ability of single-walled and/or double-walled carbon nanotubes to interact with each other via van der Waals forces ($\pi$-$\pi$ interaction) and to agglomerate (to bundle) is also very important for achieving the technical result. Defects of single-walled and/or double-walled carbon nanotubes reduce this ability. Therefore, single-walled and/or double-walled carbon nanotubes preferably contain as few defects as possible. A quantitative indicator showing the number of defects in the structure of single-walled and/or double-walled carbon nanotubes is the ratio of G-band and D-band intensities in the Raman spectrum-the larger this ratio, the fewer carbon nanotube defects. A preferable peak intensity ratio of G-band and D-band in the 532 nm Raman spectrum is at least 10, a more preferable intensity ratio of G-band and D-band in the 532 nm Raman spectrum is at least 40, an even more preferable that G-band and D-band intensity ratio in the 532 nm Raman spectrum is at least 60, and the most preferable ratio is at least 80.

For many implementations, including the production of the cathode slurry and further cathode production, single-walled and/or double-walled carbon nanotubes in the dispersion are preferably agglomerated and the mode of hydrodynamic diameter distribution of the number of carbon nanotube agglomerates ranges from 100 nm to 1 $\mu$m; most preferably, the mode of hydrodynamic diameter distribution of the number of carbon nanotube agglomerates ranges from 300 nm to 800 nm. In this case, the hydrodynamic diameter distribution of the number of carbon nanotube agglomerates can be characterized by more than one mode: e.g., it can be bimodal or trimodal. The size distribution of the number of suspended particles (such as bundles of carbon nanotubes) is commonly determined by Dynamic Light Scattering (DLS), which allows determining the suspended particle diffusion coefficient $D_{diff}$ associated with the effective hydrodynamic diameter $D_h$ via the well-known Stokes-Einstein relation.

As stated above, the ability of single-walled and/or double-walled carbon nanotubes to interact with each other via van der Waals forces ($\pi$-$\pi$ interaction) and agglomerate (bundle) is also important to achieve the technical result, but this is especially important to ensure the stability of the cathode slurry, which requires dispersion for its production. The length of a significant portion of the bundles preferably exceeds the typical size of the active cathode material, e.g., over 10 $\mu$m. Thus, note that the length of the bundles of single-walled and/or double-walled carbon nanotubes significantly exceeds the hydrodynamic diameter. The Stokes-Einstein relation for cylindrical particles (nanotubes and their bundles) having length L and diameter d, with averaging over all possible orientations, is provided by equation (2)

$$D_{diff} = \frac{kT}{3\pi\eta L}\left[\ln\left(\frac{L}{d}\right) + 0.32\right] \qquad (2)$$

See N.Nair, W.Kim, R.D. Braatz, M.S. Strano, Dynamics of Surfactant-Suspended Single-Walled Carbon Nanotubes in a Centrifugal Field, Langmuir, 2008, Vol.24, pp. 1790-1795 doi: 10.1021/la702516u, or, if particles are assumed to be prolate ellipsoids, by equation (3)

$$D_{diff} = \frac{kT}{3\pi\eta L\sqrt{1-(d/L)^2}}\ln\left[\frac{1+\sqrt{1-(d/L)^2}}{(d/L)}\right] \qquad (3)$$

See J. Gigault, I. Le Hécho, S. Dubascoux, M. Potin-Gautier, G. Lespes, Single-walled carbon nanotube length determination by asymmetrical-flow field-flow fractionation hyphenated to multi-angle laser-light scattering, J. Chromatogr. A, 2010, Vol. 1217, pp. 7891-7897].

Two models (2) and (3) lead to very close values of the shape factor, which shows how many times the bundle length is greater than its effective hydrodynamic diameter. Considering that the length-to-diameter ratio of the vast majority of nanotube bundles in the suspension ranges between 100 and 10000, the shape factor is in a narrow range of 5 to 10. Therefore, the length L of a carbon nanotube bundle can be estimated up to a factor of 2 from the value of the effective hydrodynamic diameter from inequality (4):

$$5D_h < L < 10D_h \qquad\qquad (4)$$

Therefore, it is preferable that the distribution of single-walled and/or double-walled carbon nanotube agglomerates (bundles) by their hydrodynamic diameter is characterized by more than one mode and/or at least one mode is more than 2 $\mu$m.

The presence of agglomerates of single-walled and/or double-walled carbon nanotubes with a size of more than 10 $\mu$m is manifested in another property of the dispersion of single-walled and/or double-walled carbon nanotubes and HNBR, which is rapid segregation of the dispersion under oscillating shear strain in a narrow slot channel with its size comparable to the agglomerate size. Therefore, it is preferable that the dispersion to have the ability to segregate into a solvent with low content of single-walled and/or double-walled carbon nanotubes and a highly-concentrated gel of single-walled and/or double-walled carbon nanotubes and HNBR under oscillating shear strain at a frequency of 1 Hz and a relative shear strain amplitude of 100% in the cone-and-plate rheometer cell, e.g., in the cone-and-plate rheometer cell with a cone angle of 1°.

In addition to single-walled and/or double-walled carbon nanotubes, the dispersion may contain but not limited to impurities of other carbon allotropes, including amorphous carbon and/or graphite and/or multi-walled carbon nanotubes. The impact of these impurities on the dispersion rheology is insignificant and, therefore, the impurities do not affect the technical result.

The dispersion of single-walled and/or double-walled carbon nanotubes and/or agglomerates thereof may contain impurities of Group 8-11 metals or metal carbide used as a catalyst in the production of carbon nanotubes, e.g., iron or cobalt, or other metals, bimetallic particles, or their alloys, which are due to how these carbon nanotubes are obtained. For some implementations, including the production of the cathode slurry and further production of the cathode, the content of Group 8-11 metal impurities in single-walled and/or double-walled carbon nanotubes and/or agglomerates thereof is preferably less than 1 wt.%. For some implementations, the content of Group 8-11 metal impurities in single-walled and/or double-walled carbon nanotubes and/or agglomerates thereof is more preferably less than 0.1 wt.%. For other implementations, on the contrary, there is no reason to restrict the content of Group 8-11 metal impurities so much, and their content in single-walled and/or double-walled carbon nanotubes and/or agglomerates thereof can be up to 15 wt.%.

For the best synergistic effect to achieve minimum flow behavior index n, it is preferred that the surface of single-walled and/or double-walled carbon nanotubes contains functional groups. For some implementations, it is preferred that single-walled and/or double-walled carbon nanotubes contain carbonyl and/or hydroxyl, and/or carboxyl groups on their surface. For other implementations, carbon nanotubes preferably contain chlorine-containing groups on the surface, but not limited to the examples given. In this case, the interaction between carbon nanotubes and acetonitrile units of rubber molecules is stronger, and the synergistic effect of HNBR and nanotubes on lower flow behavior index is the most pronounced. The functional groups can be produced on the surface of carbon nanotubes by various methods known in the art. For example, carboxyl functional groups can be produced on the surface of carbon nanotubes by heat treatment in a nitric acid solution, and chlorine-containing functional groups can be produced by one of the methods described in RU 2717516 C2, but not limited to the examples given. Methods for functionalizing carbon nanotubes are not the subject of the present invention. It is preferable that the content of functional groups on the surface of single-walled and/or double-walled carbon nanotubes is at least 0.1 wt.%. For some implementations, it is preferable that single-walled and/or double-walled carbon nanotubes contain at least 0.1 wt.% of carbonyl and/or hydroxyl, and/or carboxyl groups on their surface. The most preferable content of chlorine on the surface of single-walled and/or double-walled carbon nanotubes is at least 0.1 wt.%. However, the technical result is also achievable with single-walled and/or double-walled carbon nanotubes not containing functional groups on the surface, e.g., deliberately heated in an inert atmosphere to remove potential functional groups on the surface.

The choice of solvent depends on the requirements for the subsequent application of the dispersion. For example, the dispersion solvent can be an organic solvent, such as N-methyl-2-pyrrolidone, ethylene carbonate, tetrahydrofuran, dimethyl sulfoxide, dimethylacetamide, or a mixture thereof or others, but not limited to the examples given, or solutions of two or more solvents, and aqueous solutions of organic solvents. Moreover, from the point of view of the safety of production and operation of the dispersion, it is preferable that the flash point of the solvent is at least 70 °C to ensure safe production and operation of the dispersion. For some implementations, the flash point of the organic solvent is preferably at least 80 °C, e.g., N-methyl-2-pyrrolidone (89 °C flash point) or dimethylacetamide (87 °C flash point), or other solvents, but not limited to the examples given.

Dispersions containing solvent, HNBR, and single-walled and/or double-walled carbon nanotubes are pseudoplastic and, due to the synergistic interaction of the single-walled and/or double-walled carbon nanotubes and HNBR in the dispersion, they are characterized by a very strong dependence of dispersion viscosity on the shear rate in the flow. This solves the technical problem, for the majority of applications, in which it is necessary to ensure, on the one hand, a high viscosity of undisturbed dispersion (during storage and/or transportation) and, on the other hand, the required viscosity under specific dispersion usage conditions-when the dispersion flows through a pipe or when it is sprayed through a nozzle, or in other applications with a given shear rate in the flow. To solve the problem, it is preferable that the value of the fluid behavior index, n, be sufficiently small: not more than 0.37, and the flow consistency index K is at least 3.2 Pa·s$^n$. More preferably, the value of the flow behavior index n is not more than 0.30; and most preferably, the value of the flow behavior index n is not more than 0.2.

The flow behavior index n and the flow consistency index K refer to the parameters of dynamic dispersion viscosity $\mu_{eff}$ as a function of shear rate $\gamma$, as described by the Ostwald-de Waele equation (1) above. It is important to note that the dependence of the dispersion viscosity as a function of shear rate may not follow the Ostwald-de Waele power law exactly. If the behavior of the dispersion viscosity as a function of a shear rate differs from the power law, the flow behavior index n and the flow consistency index K are taken to be the parameters corresponding to the best linear approximation on the curve of viscosity logarithm as a function of shear rate logarithm, based on the least squares criterion, for example.

The value of the flow behavior index n and the flow consistency index K preferably meet the following condition: $n < 1.25 \cdot \lg(K/(Pa \cdot s^n)) - 0.628$. In this case, the viscosity of the undisturbed dispersion during storage remains high, more than 20 Pa s at a shear rate equal to or less than $1/6.3$ s$^{-1}$, which allows long-term storage and/or transportation of the dispersion without agglomeration and/or sedimentation of carbon nanotubes and agglomerates thereof.

The value of the flow behavior index n and the flow consistency index K preferably meet the following condition: $n < 1.24 - 0.787 \cdot \lg(K/(Pa-s))$. In this case, the dispersion viscosity in the flow is below 2 Pas at a shear rate equal to or greater than 18.6 s$^{-1}$ and, therefore, low enough for the processing that uses this dispersion, including for the production of a cathode slurry.

Another approach to describing viscous properties of a fluid is to measure the complex elastic modulus G* under oscillating shear strain, and the storage modulus G' real component, and the loss modulus G" apparent component. These values are usually measured in plate-and-plate cells thermostatted at a temperature of 20 +/- 1 °C, or more preferably, in cone-and-plate cells, since the latter provide the same shear rate throughout the entire volume of the cell. For a cone with an angle of 1°, the cone oscillation relative to the plane by 1° with a frequency of 1 Hz means a shear strain amplitude of 100% and a shear rate of 1 s$^{-1}$. As noted above, the dispersion must be a non-ideal pseudoplastic viscoelastic fluid with a dynamic viscosity of more than 20 Pa s at stationary shear rates of less than 1 s$^{-1}$, e.g., $(1/6.3)$ s$^{-1}$, to achieve the technical result. These values of shear rates correspond to a shear strain amplitude of less than 16% at an oscillation frequency of 1 Hz. Unfortunately, for the dispersions containing carbon nanotubes it is impossible to establish a direct correspondence between the dynamic viscosity under steady flow conditions and the components of the complex modulus determined in an oscillating system. However, it is apparent that a larger loss modulus G" means a higher viscosity, and the phase angle $\delta = \arctan(G''/G')$ shall be greater than 15°, preferably greater than 18°, for the dispersion to be characterized as a viscoelastic fluid. In this regard, it is preferable that the dispersion is characterized by a loss modulus of more than 27 Pa at an oscillating shear strain with a frequency of 1 Hz and a relative shear strain amplitude ranging from 5 to 10% in the cone-and-plate rheometer cell, and a phase angle of more than 18° at an oscillating shear strain with a frequency of 1 Hz and a relative shear strain amplitude ranging from 5 to 10% in the cone-and-plate rheometer cell.

A method is disclosed for producing a dispersion containing a solvent with most of the molecules being electrically neutral, 0.2 to 2 wt.% of single-walled and/or double-walled carbon nanotubes, and hydrogenated nitrile butadiene rubber with a weight ratio of single-walled and/or double-walled carbon nanotubes to hydrogenated nitrile butadiene rubber of at least 0.1 and not more than 10, wherein the method comprises a sequence of at least three dispersion stages (D) and at least two alternating resting stages (R), where any of the dispersion stages (D) is either a stage of mechanical processing of the dispersion at a shear rate of at least 10000 s$^{-1}$ with a specific input energy of at least 10 W·h/kg or an ultrasonic treatment stage at a frequency of at least 20 kHz with a specific input energy of at least 1 W·h/kg, and the resting stage (R) is exposing the dispersion between two successive dispersion stages (D) at a shear rate of less than 10 s$^{-1}$ for at least 1 minute.

The disclosed method for producing the dispersion allows, on the one hand, dispersing single-walled carbon nanotubes due to high shear rates at the stages (D), and, on the other hand, forming a segregated structure of a two-component self-sorting gel containing gel areas with predominantly HNBR and solvent, which are interbound into a single network by single-walled and/or double-walled carbon nanotubes at the resting stages (R). Note that this production method ensures better dispersion and distribution of single-walled and/or double-walled carbon nanotubes. Since the resultant dispersion is pseudoplastic during the mechanical processing or ultrasonic treatment, the formation of local zones with low viscosity in areas with high shear rates and local zones with high viscosity in areas with low shear rates and low intensity or almost no weight transfer is possible between these zones. For this reason, in the proposed method, to achieve a technical result, it is necessary to repeat the stages of mechanical processing or ultrasonic treatment more than twice, and between periodically repeating stages of the mechanical processing or ultrasonic treatment the dispersion should be undisturbed or at relatively low shear rates of less than 10 $s^{-1}$ for at least 1 minute.

The mechanical processing can be performed with a variety of dispersing or mixing equipment providing the desired shear rate in the dispersion flow, including, for example, rotor-stator dispersers and homogenizers (dissolvers), colloid mills, bead mills, planetary mills, high-pressure homogenizers (HPHs), and rotary pulsation apparatus (RPA). In some implementations, a disk dissolver, i.e., a vertical agitator with a disk impeller, preferably with a toothed disk impeller (cutter), is sufficient and preferable for mechanical activation. If a bead mill or high-pressure homogenizers with the dispersion stream passing through a very high shear rate zone is used, the dispersion stage (D) comprises pushing the entire volume of the dispersion through the mill or the homogenizer. In this case, the resting stage (R) implies the presence of a dispersed mixture comprising a solvent, HNBR and single-walled and/or double-walled carbon nanotubes between the dispersion cycles in a tank where it is just agitated slowly at a shear rate of less than 10 $s^{-1}$.

The choice of equipment for mechanical processing or ultrasonic treatment, specific power, duration of processing at each stage depends on the available equipment and the composition of the dispersion: the selected solvent, the concentration of carbon nanotubes, the concentration and brand of the selected HNBR, and availability of other fillers and additives. In this regard, some equipment options may not apply to some dispersion compositions.

In some cases, the method preferably comprises a sequence of alternating at least five dispersion stages (D) and at least four resting stages (R), where any of the dispersion stages (D) is either a stage of mechanical processing of the dispersion at a shear rate of at least 10000 $s^{-1}$ with a specific input energy of at least 10 W h/kg or an ultrasonic treatment stage at a frequency of at least 20 kHz with a specific input energy of at least 1 W·h/kg, and the resting stage (R) is exposing the dispersion between two successive dispersion stages (D) to a shear rate of less than 10 $s^{-1}$ for at least 1 minute. In other implementations, the method preferably comprises a sequence of alternating at least 10 dispersion stages (D) and at least 9 resting stages (R). In other implementations, the method preferably comprises a sequence of alternating at least 30 dispersion stages (D) and at least 29 resting stages (R).

In some implementations, a sequence of at least three dispersion stages (D) and at least two resting stages (R) alternating is implemented by circulating the dispersion between one or several devices providing the stages of mechanical processing or ultrasonic treatment, and a tank where the dispersion is held and agitated slowly at shear rates of less than 10 $s^{-1}$. Here, the factor of such dispersion circulation during the dispersion production is preferably at least 5. In some method implementations, the dispersion circulation factor during production can be at least 10. In other implementations, the dispersion circulation factor during the production is preferably at least 30. The preferred number of circulation cycles is defined by the composition of the dispersion, type of dispersing equipment, and specific input power at the dispersion stage.

In some implementations, the production method preferably comprises circulating the dispersion between a rotary pulsation device at a shear rate of at least 10000 $s^{-1}$ with a specific input energy of at least 10 Wh/kg, an ultrasonic treatment device with an immersed sonotrode (ultrasound probe, ultrasonic activator) with a frequency of at least 20 kHz and a specific input energy of at least 1 Wh/kg, at a circulation rate of 100 to 10000 kg/h, and a tank where the dispersion is held for at least 1 min and agitated slowly at shear rates of less than 10 $s^{-1}$. The residence time refers to the ratio between the tank volume and the circulation rate, i.e., the mean time the dispersion is in the tank in the approximation of an ideal mixing apparatus. In some implementations, the shear rate between the rotor and the stator of the rotary pulsation device is preferably at least 20000 $s^{-1}$, most preferably at least 50000 $s^{-1}$. In some implementations, the specific input energy is preferably not more than 30 W h/kg when the dispersion passes through the rotary pulsation device; however, the technical result is also achievable with the specific input energy between 10 and 30 Wh/kg when the dispersion passes through the rotary pulsation device. Also preferably, the ultrasonic treatment is at a frequency of at least 40 kHz and the specific input energy of more than 2 W h/kg; however, the technical result is also achievable at a frequency of 20 to 40 kHz and the specific input energy of 1 to 2 W·h/kg, but this requires more cycles.

In some implementations, the production method preferably comprises circulating the dispersion at a circulation rate of 100 to 10000 kg/h between a high-pressure homogenizer at a shear rate of at least 10000 $s^{-1}$ and the specific input energy of at least 10 Wh/kg, and a tank where the dispersion is held and agitated slowly at shear rates of less than 10 $s^{-1}$, with a mean tank residence time of at least 1 min. The pressure upstream of the disperser valve can be more than 30 MPa, e.g., more than 60 MPa, and it is determined by the design of the disperser. The nozzle diameter is also determined by the disperser design, which is outside the scope of this invention, and can be less than 2 mm, e.g., 700 $\mu$m. In some implementations, the shear rate in the disperser is preferably at least 70000 $s^{-1}$, most preferably more than

$500000 \text{ s}^{-1}$. In some implementations, the specific input energy at each dispersion stage is preferably over 20 Wh/kg, most preferably over 30 Wh/kg. However, the technical result is also achievable with the specific input energy at each dispersion stage between 10 to 20 Wh/kg of the dispersion, but this requires more cycles.

A method is disclosed for producing a cathode slurry containing an active material, a solvent, hydrogenated nitrile butadiene rubber, and at least 0.005 wt.% of single-walled and/or double-walled carbon nanotubes, wherein the method comprises the stages of (1) mixing lithium-containing active material and the above dispersion containing a solvent with most of the molecules being electrically neutral, hydrogenated nitrile butadiene rubber, and single-walled and/or double-walled carbon nanotubes, wherein the content of single-walled and/or double-walled carbon nanotubes in the dispersion is 0.2 to 2 wt.%, and the weight ratio between the single-walled and/or double-walled carbon nanotubes and hydrogenated nitrile butadiene rubber in the dispersion is at least 0.1 and not more than 10, and (2) agitating the resultant mixture to produce a homogeneous slurry.

A cathode slurry is disclosed, containing an active material, a solvent, hydrogenated nitrile butadiene rubber, and single-walled and/or double-walled carbon nanotubes, wherein the cathode slurry contains at least 0.005 wt.% of single-walled and/or double-walled carbon nanotubes and it is produced by the above method. The cathode slurry preferably contains at least 0.01 wt.% of single-walled and/or double-walled carbon nanotubes.

At stage (2), the agitating of the mixture obtained at stage (1) to produce a homogeneous suspension can be performed by any known mixing method and with any mixing equipment, e.g., vertical agitators (also known as dissolvers), planetary mixers, rotor-stator type mixers, twin screw mixers, but not limited to the examples given. In some implementations, the agitating is preferably performed using a disk dissolver, i.e., a vertical stirrer with a disk impeller, preferably with a toothed disk impeller (cutter). Planetary mixers are the most preferable at stage (2). Note that the choice of the mixing method for stage (2) and the choice of equipment for this stage are outside the scope of this invention.

An active cathode slurry material refers to any lithium-containing material suitable as an active cathode material, i.e., a material with the following properties (as reviewed by M.S. Wittingham, Lithium Batteries and Cathode Materials, Chem.Rev. 2004, Vol. 104, pp. 4271-4301): (1) The material contains a readily reducible/oxidizable ion, for example a transition metal cation. (2) The material reacts with lithium in a reversible manner with no fundamental change of its structure; (3) the material reacts with lithium with a high free energy (Helmholtz potential) of reaction; (4) the material interacts with lithium very rapidly. For example, the active material of the cathode slurry can be one of the following: $LiTiS_2$, $LiVSe_2$, $LiCoO_2$, $LiNiO_2$, $LiFePO_4$ (also referred to as LFP), $LiNi_xMn_yCo_zO_2$ (where x, y, z are positive numbers less than 1, such that x+y+z=1, also referred to as NMC, e.g., NMC 811 for $LiNi_{0.8}Mn_{0.1}Co_{0.1}O_2$), or any other, but not limited to the examples given, or a mixture thereof.

The simultaneous presence of single-walled and/or double-walled carbon nanotubes and HNBR in the cathode slurry, due to a synergistic effect similar to that described above for the dispersion, leads to a significant difference in the rheological properties of the slurry from the ideal (Newtonian) fluid, which is expressed in the fact that the value of the flow behavior index n for the cathode slurry is small. It is preferably not more than 0.3 with a flow consistency index K of at least $10 \text{ Pa·s}^n$, which means that the cathode slurry simultaneously has, on the one hand, a very low viscosity, e.g., not more than 1 Pa s at shear rates of $100 \text{ s}^{-1}$ or more, which are typical for the subsequent application of the cathode slurry to the conductive electrode plate, and on the other hand, high viscosity, e.g., at least 10 Pa s at a shear rate of $1 \text{ s}^{-1}$. This combination of properties of the cathode slurry is preferable and solves the technical problem of providing high viscosity during storage before use (application to the current collector of the cathode), high viscosity after the application to the current collector without spreading to ensure good quality on the edge of the active material layer of the cathode and, at the same time, low viscosity of the cathode slurry under the processing conditions defined for its application to the current collector.

The cathode slurry can contain one or several organic solvents or an aqueous solution of organic solvents. N-methyl-2-pyrrolidone is the most preferable among organic solvents, but other solvents such as ethylene carbonate, tetrahydrofuran, dimethylsulfoxide, dimethylacetamide, or others can also be used, but not limited to the examples given. Apparently, the cathode slurry should contain a solvent or solvents included in the above dispersion, i.e., containing a solvent, wherein most of molecules are electrically neutral, HNBR, and single-walled and/or double-walled carbon nanotubes used to produce the cathode slurry. However, the cathode slurry may additionally contain another solvent, if this provides any advantages from the point of view of the technological process. An additional solvent that is chemically similar to the one in the dispersion, or a different one, can be added at stage (1) of mixing lithium-containing active cathode material and the dispersion containing single-walled and/or double-walled carbon nanotubes and HNBR, or can be added at an additional mixing stage preceding the mixing stage (1), or can be added at a separate mixing stage, after the mixing stage (1) and before stage (2).

Binders can be further added to the cathode slurry to ensure the required plasticity and strength of the cathode material after drying. These additives, which are most typically high molecular (polymeric) materials, can be introduced in the form of solutions or suspensions, e.g., aqueous suspensions, suspensions based on N-methyl-2-pyrrolidone or another solvent, wherein the choice of the solvent depends on the features of the technological process used. These additives can include, e.g., suspensions of fluoroplastics, latex of various rubbers, polyacrylic acid or its salts, such as Na or Li salt. Hydrogenated nitrile butadiene rubber of the same grade as in the dispersion, or a different one, can be added to the cathode slurry as a binder. Binders can be added at stage (1) of mixing lithium-containing active cathode material and the dispersion containing single-walled and/or double-walled carbon nanotubes and HNBR, or can be added at an additional mixing stage preceding the mixing stage (1), or can be added at a separate mixing stage, after the mixing stage (1) and before stage (2).

To achieve the technical result, it is important that the dispersion used to produce the slurry at stage (1) contains both HNBR and single-walled and/or double-walled carbon nanotubes, i.e., it is not enough for the dispersion used to produce the slurry to contain single-walled and/or double-walled carbon nanotubes and HNBR to be added thereto during the production of the cathode slurry.

Summarizing the above, in some implementations, it is preferable that the cathode slurry production process include one or several additional stages of mixing with a solvent and/or one or several binders and/or electrically conductive additives before stage (2). In some implementations, it is preferable that a solvent and/or one or several binders and/or electrically conductive additives are also added to the mixture at the mixing stage (1).

It is preferable that the weight ratio of single-walled and/or double-walled carbon nanotubes to HNBR in the cathode slurry is at least 0.05 and not more than 10. For some implementations, the weight ratio of single-walled and/or double-walled carbon nanotubes to HNBR in the cathode slurry is preferably at least 0.1 and not more than 5. The most preferable weight ratio of single-walled and/or double-walled carbon nanotubes to HNBR in the cathode slurry is at least 0.33 and not more than 3. However, the synergistic effect producing the technical result is also achievable with a weight ratio of single-walled and/or double-walled carbon nanotubes to HNBR in the cathode slurry in the range of 0.03 to 0.33. For some implementations, the most preferable weight ratio of single-walled and/or double-walled carbon nanotubes to HNBR in the cathode slurry is at least 0.5 and not more than 2. The synergistic effect producing the technical result is also achievable with a weight ratio of single-walled and/or double-walled carbon nanotubes to HNBR in the cathode slurry in the range of 2 to 10.

In some implementations, it is preferable that the cathode slurry further contains, but no limited to, at least 0.01 wt.% of electrically conductive additives other than single-walled and/or double-walled carbon nanotubes, e.g., graphite, carbon black, acetylene black, carbon fibers of various morphology, thickness, and length, for example multi-walled carbon nanotubes, or metal particles, e.g., such additives can ensure another benefit of reducing the internal resistance of the cathode.

The cathode slurry may comprise Group 8-11 metal particles, which are impurities in single-walled and/or double-walled carbon nanotubes from the carbon nanotube production process. These electrically conductive additives, including metal particles, do not interfere the achievement of the technical result. Note, however, that metal particles are undesirable in most implementations, and the content of Group 8-11 metal impurities in the cathode slurry is preferably less than 1 wt.% of the single-walled and double-walled carbon nanotubes. Some applications prefer that the content of Group 8-11 metal impurities in the cathode slurry is less than 0.1 wt.% of the content of single-walled and double-walled carbon nanotubes.

This invention provides a method for producing a cathode of a lithium-ion battery, characterized in that the method comprises a sequence of stages for producing the above cathode slurry: (1) mixing lithium-containing active material and the above dispersion containing a solvent with most of the molecules being electrically neutral, hydrogenated nitrile butadiene rubber, and single-walled or double-walled carbon nanotubes, wherein the content of single-walled and/or double-walled carbon nanotubes in the dispersion is from 0.2 to 2 wt.%, and the weight ratio of single-walled and/or double-walled carbon nanotubes to hydrogenated nitrile butadiene rubber in the dispersion is at least 0.1 and not more than 10, and (2) agitating the resultant mixture to produce a homogeneous slurry, and (3) applying the resultant slurry to the current collector, (4) drying the applied slurry until the cathode is formed; and (5) compacting the cathode to the required density. The method of producing the cathode can comprise additional stages of introducing a binder and/or an additional solvent that is chemically similar to the one in the dispersion, or a different one, which can be added at the stage of (1) mixing lithium-containing active cathode material and the dispersion containing single-walled and/or double-walled carbon nanotubes and HNBR, or can be added at a separate mixing stage preceding the mixing stage (1), or at a separate mixing stage after the mixing stage (1) before stage (2).

This invention provides a cathode of a lithium-ion battery, characterized in that it is produced by a method comprising a sequence of stages for producing the above cathode slurry: (1) mixing lithium-containing active material and the above dispersion containing a solvent with most of the molecules being electrically neutral, hydrogenated nitrile butadiene rubber, and single-walled or double-walled carbon nanotubes, wherein the content of single-walled and/or double-walled carbon nanotubes in the dispersion is from 0.2 to 2 wt.%, and the weight ratio of single-walled and/or double-walled carbon nanotubes to hydrogenated nitrile butadiene rubber is at least 0.1 and not more than 10, and (2) agitating the resultant mixture to produce a homogeneous slurry, and (3) applying the resultant slurry to the current collector, (4) drying the applied slurry until the cathode is formed; and (5) compacting the cathode to the required density.

Due to the simultaneous presence of HNBR and single-walled and/or double-walled carbon nanotubes in the cathode slurry, which affect the dependence of viscosity on shear rate and ensure both the stability of the cathode slurry and moderate viscosity under the conditions of its application to the current collector, a lithium-ion battery with the cathode of the invention demonstrates highly stable operation in successive charge-discharge cycles. For example, the battery capacity after 400 charge and discharge cycles with a rate of 1C can be over 80% of the initial battery capacity, over 90% in some implementations, and over 95% in some implementations. The achievable battery stability depends on the active material in the battery cathode and on the battery anode.

The invention is illustrated by accompanying Figures and Examples which are provided for illustration only and are not intended to limit possible implementations of the invention. For convenience, the basic information on the Examples is also summarized in the Table that provides information on the compositions and properties of the dispersions.

**Brief description of the attached drawings**

FIG. 1 shows transmission electron micrographs of Tuball™ single-walled carbon nanotubes in dispersions of Examples 1 and 4, as well as Comparative Example 9.

FIG. 2 shows dynamic light scattering data for distribution of volume fraction of particles (nanotubes and their bundles) (%) by hydrodynamic diameter $D_h$ (nm) in dispersions of Example 1 (circles), Example 2 (triangles), and Example 5 (squares).

FIG. 3 shows dependence of dynamic viscosity (Pa s) of the dispersion of Example 1 (circles), Example 2 (squares), Example 3 (diamonds), Comparative Example 8 (dark triangles), and solution of Comparative Example 9 (light triangles, these values are multiplied by 100 for ease of presentation) on shear rate ($s^{-1}$).

FIG. 4 shows dependence of dynamic viscosity (Pa s) of the cathode slurry of Example 1 (circles), Example 2 (squares), Example 3 (diamonds), and Comparative Example 8 (dark triangles) on shear rate ($s^{-1}$).

FIG. 5 shows photos of a slurry layer applied to the current collector of Example 1 (left) and Comparative Example 9 (right).

FIG. 6 shows dependence of capacity related to initial capacity (%) on the number of charge-discharge cycles (charge rate 1C, discharge rate 1C) of lithium-ion battery with the cathode of Example 1.

FIG. 7 shows dependence of capacity related to initial capacity (%) on the number of charge-discharge cycles (charge rate 1C, discharge rate 1C) of the lithium-ion battery with cathodes of Examples 2 and 3.

FIG. 8 shows transmission electron micrographs of single-walled and double-walled carbon nanotubes of dispersions of Example 3.

FIG. 9 shows dependence of capacity related to initial capacity (%) on the number of charge-discharge cycles (charge rate 0.5C, discharge rate 1C) of lithium-ion battery with the cathode of Example 4.

FIG. 10 shows the dispersion segregation with an oscillating shear strain at a frequency of 1 Hz with a 100% amplitude applied to the dispersion of Example 5 in the cone-and-plate rheometer cell: measuring plate on the left and measuring cone on the right, the cone angle is 1°.

**Detailed Description of embodiments of the invention**

Example 1.

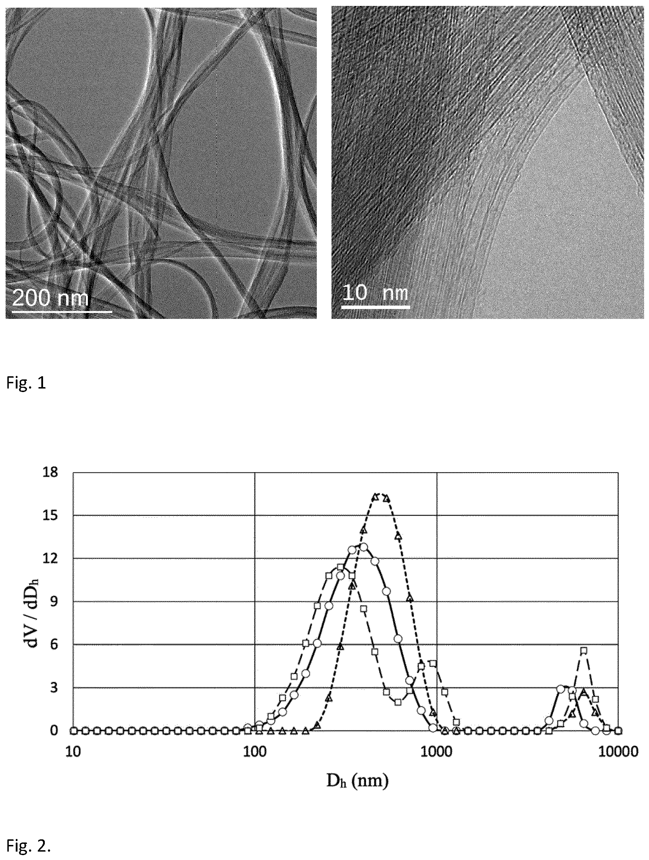

The dispersion contains 0.8 wt.% of partially hydrogenated nitrile butadiene rubber Therban® 3496 with a viscosity of $ML_{(1+4)}$ 100 °C 55 Mooney units, with a content of nitrile units 34 wt.%, with a residual content of polybutadiene units 18 wt.%, and the content of units obtained by hydrogenation of conjugated diene units 48 wt.%. The dispersion also contains 0.4 wt.% of single-walled carbon nanotubes and agglomerates thereof. N-methyl-2-pyrollidone (NMP) was used as a solvent. The single-walled carbon nanotubes used for producing the dispersion are Tuball™ SWCNTs. The SWCNT diameter is in the range of 1.2 to 2.1 nm, and the mean diameter is 1.54 nm (the diameter was determined by TEM of the dry suspension matter, and by the positions of the absorption bands $S_{1-1}$ in the optical absorption spectrum of the suspension). Raman spectroscopy at 532 nm shows a strong G line at ca. 1580 $cm^{-1}$ typical for single-walled carbon nanotubes, and a D line at ca. 1330 $cm^{-1}$ typical for other allotropic forms of carbon and defects of single-walled carbon nanotubes. The G/D line intensity ratio is 80.5. The specific surface area determined from nitrogen adsorption isotherms is 1220 $m^2$/g. See **FIG. 1** for the transmission electron micrographs of the SWCNTs used. The SWCNTs for producing the dispersion were further modified with chlorine by the method described in RU 2717516 C2. The energy dispersion spectroscopy shows that the chlorine content in the Tuball SWCNT is 0.25 wt.%. The inductively coupled plasma atomic emission spectroscopy (ICP-AES) shows that the SWCNTs contain an impurity of 0.46 wt.% of iron,. The weight ratio of single-walled carbon nanotubes to HNBR is 0.5.

The dispersion was produced by mixing the required proportions of NMP, HNBR and SWCNT, 8-fold repeating the alternating stages of dispersing (D) in a Chaoli GJB500 high-pressure homogenizer, and holding at rest (R) in a 65 liter tank while agitating slowly by a gate agitator at a shear rate of about 2 s$^{-1}$. The dispersion was carried out at a pressure of 60 MPa, a dispersion transfer flow rate of 300 kg/h, and a shear rate in the homogenizer valve nozzle of about 2.3·10$^5$ s$^{-1}$. The measured power consumption was 16 kW, the specific input energy at the stage (D) was about 53 W-h/kg. The tank residence time of the dispersion at the stage (R) was about 13 minutes.

The size distribution of the number of carbon nanotube bundles was determined by Dynamic Light Scattering (DLS) of the dispersion diluted with water to a SWCNT concentration of 0.001 wt.%. The hydrodynamic diameter distribution of the volume fraction of particles (nanotubes and agglomerates thereof) in a dilute dispersion obtained by DLS using a Malvern Zetasizer ZS device is shown by the curve with round markers in **FIG. 2. FIG. 2** shows that the size distribution of the volume fraction of nanotubes and agglomerates thereof is bimodal, with the hydrodynamic diameters ranging from 100 to 1000 nm and 4 to 7 $\mu$m. The first and most intense maximum is described by the lognormal hydrodynamic diameter distribution of the volume fraction of nanotubes and agglomerates thereof with a mode at $D_{hm}$ = 380 nm, and the second mode $D_{h2m}$ of about 5 $\mu$m.

Complex modulus measurements taken on an Anton Paar MCR302 rheometer on the cone-and-plate cell with a cone angle of 1° and an oscillation frequency of 1 Hz showed that, with an oscillation amplitude ranging from 0.05 to 0.1° corresponding to shear strains from 5 to 10%, the loss modulus G" is from 53 to 75 Pa, which means a high viscosity of the dispersion at relative rest, and the phase angle is 27.5°, which characterizes the dispersion as a viscoelastic non-ideal fluid.

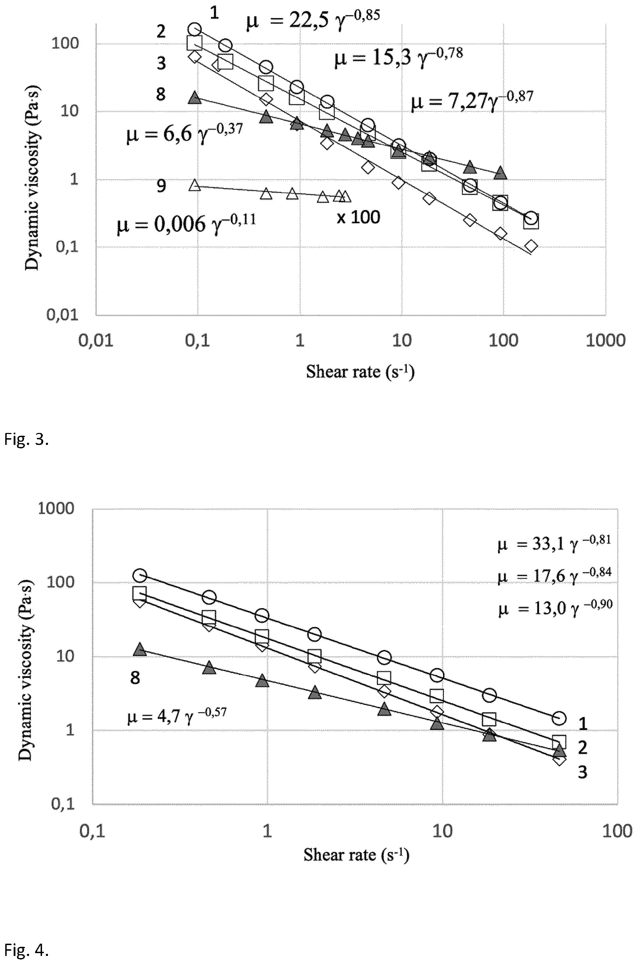

The dispersion is characterized by the viscosity (Pa s) as a function of shear rate (s$^{-1}$) provided in FIG. 3 as circles (curve 1). The viscosity was measured at a constant temperature of 25 °C using a Brookfield DV2-TLV viscometer with an SC4-21 spindle. The dependence of viscosity on shear rate is well described by the Ostwald-de Waele power law in a range from 0.093 s$^{-1}$ to 47 s$^{-1}$. The flow behavior index n is 0.15, and the flow consistency index is 22.5 Pa·s$^{0.15}$. The dispersion viscosity in the area of low shear rates of less than 1/6.3 s$^{-1}$ is more than 100 Pa·s, and it is less than 1.95 Pa·s in the area of shear rates of more than 18.6 s$^{-1}$. The power law extrapolation allows estimating the dispersion viscosity of 0.8 Pa s at a shear rate of 100 s$^{-1}$.

The main dispersion parameters are given in the summary Table.

The dispersion was used to produce the cathode slurry containing 98.83 wt. parts of the active material LiNiCoAlO$_2$ (NCA), 29.82 wt. parts of NMP solvent, 1 wt. part of polyvinylidene fluoride binder, 1 wt. part of acetylene black, 0.12 wt. parts of Arlanxeo hydrogenated nitrile butadiene rubber, and 0.06 wt. parts of single-walled carbon nanotubes.

The cathode slurry was produced by the sequence of stages:

- adding 10 g of a solution containing 1 g of Solef 5130 polyvinylidene fluoride (PVDF) binder and 9 g of NMP to 15 g of the dispersion, mixing on an overhead stirrer for 30 min-an additional binder and solvent adding stage implemented before stage (1);
- mixing the resultant mixture with 98.83 g of active material LiNiCoAlO$_2$ (NCA) for 30 minstage (1);
- adding 1 g of acetylene black and further 6 g of NMP solvent to the resultant mixture-an additional stage of adding electrically conductive additives and a solvent, implemented after stage (1);
- agitating for 16 hours to produce a homogeneous slurry-stage (2).

With both the single-walled carbon nanotubes and HNBR present, the resultant cathode slurry also has a sharply pronounced dependence of viscosity on shear rate, as demonstrated by round markers (curve 1) in **FIG. 4.** The flow behavior index n is 0.19, and the flow consistency index is 33.1 Pa·s$^{0.16}$. The dependence approximation allows an estimate that the slurry viscosity is less than 0.8 Pa s at a shear rate of 100 s$^{-1}$, which provides process capacity for the application to the current collector plate. At shear rates of less than 1 s$^{-1}$, the viscosity is more than 33 Pa s, which ensures the slurry stability during storage before use, and the stability of the slurry layer on the current collector before drying.

The stability of the slurry during storage was determined by the changes in the distribution of the solid particles content along the height of the slurry layer after the slurry storage in a 50 ml cylindrical test tube with a diameter of 30 mm. For this purpose, the slurry was placed in a test tube, closed with a lid, and kept for 7 days under standard conditions (atmospheric pressure, 25 °C). After that, the upper third, the middle third, and the lower third of the test tube were collected with a pipette, and the weight fractions of the solvent and solid non-volatile components in the samples were determined by drying. For the cathode slurry of this Example, the solvent content in the initial slurry was 22.8 wt.%, after one-week storage, the solvent content was 23.2 wt.% in the lower third, 22.7 wt.% in the middle part, and 22.5 wt.% in the upper part. The difference from the initial solvent content does not exceed 2 .% relative, which is significantly less than for the slurry described below in Comparative Example 8, and it is indicative of high stability of the resultant slurry. The slurry can be used to produce the cathode after 7-day storage.

The lithium-ion battery cathode was produced by applying the resultant slurry to the current collector (stage 3), drying the applied slurry until the cathode is formed (stage 4), and compacting the cathode to the required density of

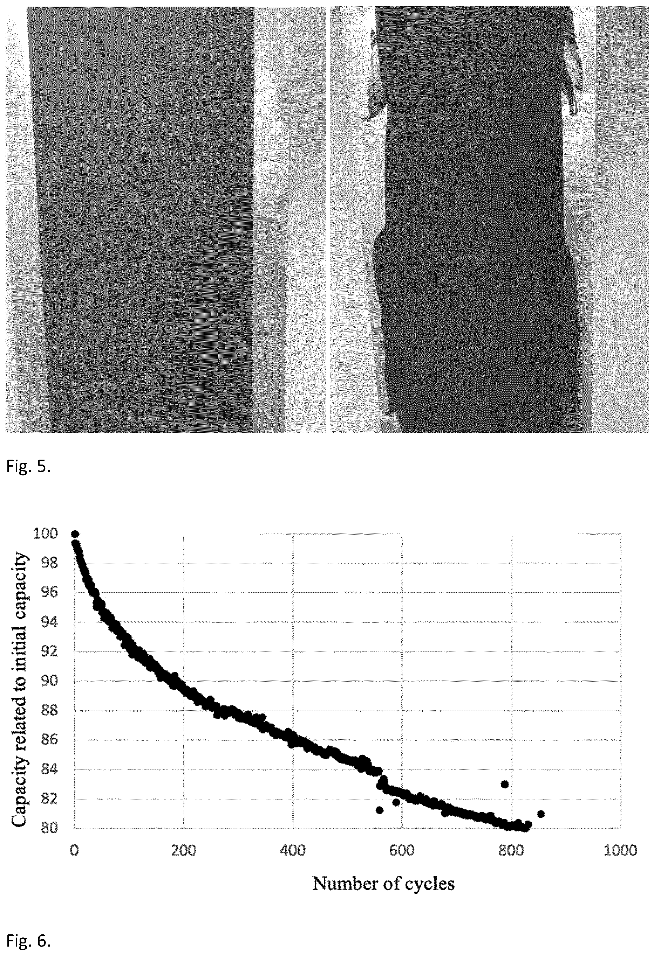

$3.8 \text{ g/cm}^2$. The photo of the cathode slurry layer applied to the current collector is shown in **FIG. 5** (left photo). The cathode properties were determined by assembling a cell with a Li anode and the Li reference electrode, and an electrolyte, which is a 1 M solution of $LiPF_6$ in the mixture of propylene carbonate:ethyl methyl carbonate:dimethyl carbonate solvents with a volume ratio of 1:1:1 and additional 1% v/v of vinyl carbonate. The initial specific capacity of the cathode at a discharge current of 0.02 A/g of the cathode material is 210 mA·h/g of the cathode material.

A lithium-ion battery was assembled from the obtained cathode and anode having silicon monoxide as the active material at a load of $4.3 \text{ mg/cm}^2$. A 25 $\mu$m thick polypropylene separator was used. A 1.2 M solution of $LiPF_6$ in the mixture of propylene carbonate:ethyl methyl carbonate:dimethyl carbonate solvents in a volume ratio of 1:1:1 with additional 10% v/v of fluoroethylene carbonate was used as an electrolyte. The initial battery capacity at a discharge rate of 0.1 C was 1500 mA·h. The dependence of capacity (referred to the initial capacity) on the number of charge-discharge cycles (charge current 1500 mA, discharge current 1500 mA) is shown in **FIG. 6.** The battery capacity is 86% of the initial capacity after 400 cycles, and 80% of the initial capacity after 800 cycles.

The resulting high stability of the final battery product in the charge-discharge cycles confirms the achieved technical result at the dispersion level: the dispersion stability combined with processability in the cathode slurry production process, at the cathode slurry level: the cathode slurry stability (no delamination) and processability when applied to the current collector (including smooth edges of the coating without material spreading onto the current collector), at the cathode level: high quality of the cathode, high specific capacity and high stability during cycling.

Embodiments of the invention

Example 2.

The dispersion contains 0.6 wt.% of low-viscosity hydrogenated nitrile butadiene rubber Therban® 3404 with a viscosity of $ML_{(1+4)}$ 100 °C 39 Mooney units, with a content of nitrile units 34 wt.%, with a residual content of polybutadiene units less than 0.9 wt.%, and the content of hydrogenated polybutadiene units 65 wt.%. The dispersion also contains 0.4 wt.% of single-walled carbon nanotubes and agglomerates thereof. The solvent is N-methyl-2-pyrrolidone (NMP), which is an organic solvent with a flash point of 89 °C. The single-walled carbon nanotubes used for producing the dispersion are Tuball™-99 SWCNTs. The SWCNT diameter is in the range of 1.2 to 2.1 nm, with a mean diameter of 1.58 nm (the diameter was determined by TEM of the dry suspension matter, and by the positions of the absorption bands $S_{1-1}$ in the optical absorption spectrum of the suspension). Raman spectroscopy at 532 nm shows a strong G line at 1580 $cm^{-1}$ typical for single-walled carbon nanotubes, and a D line at ca. 1330 $cm^{-1}$ typical for other allotropic forms of carbon and defects of single-walled carbon nanotubes. The G/D line intensity ratio is 56. The specific surface area determined from nitrogen adsorption isotherms is 1160 $m^2/g$. The inductively coupled plasma atomic emission spectroscopy (ICP-AES) shows that the SWCNTs contain an impurity of 0.4 wt.% of Fe, the Group 8 metal. The weight ratio of single-walled carbon nanotubes to HNBR in the slurry is 0.667.

The dispersion was produced by mixing the required proportions of NMP, HNBR, and SWCNTs and 10-fold dispersing in a NETZSCH Omega 500 high-pressure homogenizer at a pressure of 65 MPa and a dispersion transfer rate of 300 kg/h (stage D). An estimated shear rate in the nozzle is about $9 \cdot 10^5$ $s^{-1}$. The power consumption was 8 kW, the specific input energy at the stage (D) was about 27 W·h/kg. Between each two dispersion stages (D), the dispersion was held in a 50 liter tank at rest and agitated slowly by a gate agitator and at a shear rate of about 1 $s^{-1}$ for 10 minutes (stage R).

The size distribution of the number of carbon nanotube bundles was determined by Dynamic Light Scattering (DLS) of the dispersion diluted with water to a SWCNT concentration of 0.001 wt.%. The hydrodynamic diameter distribution of the volume fraction of particles (nanotubes and agglomerates thereof) in a dilute dispersion obtained by DLS using a Malvern Zetasizer ZS device is shown by the curve with triangle markers in **FIG. 2. FIG. 2** shows that the size distribution of the volume fraction of nanotubes and agglomerates thereof is bimodal, with the hydrodynamic diameters ranging from 100 to 1000 nm and 4 to 8 $\mu$m. The first and most intense maximum is described by the lognormal hydrodynamic diameter distribution of the volume fraction of nanotubes and agglomerates thereof with a mode at $D_{hm}$ = 500 nm, and the second mode $D_{h2m}$ of about 6.5 $\mu$m.

The dispersion is characterized by the viscosity (Pa·s) as a function of shear rate ($s^{-1}$) provided in **FIG. 3** as square markers. The flow behavior index n is 0.22, and the flow consistency index is 15.3 $Pa \cdot s^{0.22}$. The dispersion viscosity in the area of low shear rates of less than 1/6.3 $s^{-1}$ is more than 65 Pa·s, and it is less than 1.54 Pa·s in the area of shear rates of more than 18.6 $s^{-1}$. The power law extrapolation allows estimating the dispersion viscosity of 0.41 Pa s at a shear rate of 100 $s^{-1}$.

Complex modulus measurements taken on an Anton Paar MCR302 rheometer on the cone-and-plate cell with a cone angle of 1° and an oscillation frequency of 1 Hz showed that, with an oscillation amplitude ranging from 0.05 to 0.1° corresponding to shear strains from 5 to 10%, the loss modulus G" is from 38 to 50 Pa, which means a high viscosity of the dispersion at relative rest, and the phase angle is from 23° to 25°, which characterizes the dispersion as a viscoelastic non-ideal fluid.

The main dispersion parameters are given in the summary Table.

The dispersion was used to produce the cathode slurry containing 75.3 wt.% of active material $LiNi_{0.8}Mn_{0.1}Co_{0.1}O_2$ (NMC811), 23.9 wt.% ofNMP solvent, 0.79 wt.% of polyvinylidene fluoride binder, 0.012 wt.% of HNBR, and 0.008 wt.% of single-walled carbon nanotubes. The weight ratio of single-walled carbon nanotubes to HNBR is 0.67. The cathode slurry was produced by the sequence of stages:

- adding 10 g of a solution containing 10 wt.% of polyvinylidene fluoride (PVDF) in NMP to 2.53 g of the dispersion, and mixing on an overhead stirrer for 30 min-an additional binder and solvent adding stage implemented before stage (1);
- mixing the resultant mixture with 95 g of active material NCM811 and additionally with 18 g of NMP solvent-stage (1);
- agitating for 16 hours to produce a homogeneous slurry-stage (2).

With both the single-walled carbon nanotubes and HNBR present, the resultant cathode slurry also has a sharply pronounced dependence of viscosity on shear rate, as demonstrated by square markers in **FIG. 4.** The flow behavior index n is 0.16, and the flow consistency index is $17.6\ Pa \cdot s^{0.16}$. The viscosity measured at a shear rate of 46.5 $s^{-1}$ is 0.69 Pa·s, and the dependence extrapolation to a shear rate of 100 $s^{-1}$ gives a viscosity estimate of about 0.37 Pa·s, which provides process capacity for the application to the current collector plate. At shear rates of less than 1 $s^{-1}$, the viscosity is more than 17.6 Pa s, which ensures the slurry stability during storage before use, and the stability of the slurry layer on the current collector before drying.

The stability of the slurry during storage was determined by the changes in the distribution of the solid particles content along the height of the slurry layer after the slurry storage in a 50 ml cylindrical test tube with a diameter of 30 mm. For this purpose, the slurry was placed in the test tube, closed with a lid, and kept for 7 days under standard conditions (atmospheric pressure, 25 °C). After that, the upper third, the middle third, and the lower third of the test tube were collected with a pipette, and the weight fractions of the solvent and solid non-volatile components in the samples were determined by drying. For the cathode slurry of this Example, the solvent content in the initial slurry was 23.9 wt.%, after one-week storage, the solvent content was 24.4 wt.% in the upper third, 23.7 wt.% in the middle part, and 23.5 wt.% in the lower part. The difference from the initial solvent content does not exceed 2 % relative, which is significantly less than for the slurry described below in Comparative Example 8, and it is indicative of high stability of the resultant slurry.

The lithium-ion battery cathode was produced by applying the resultant slurry to the current collector (stage 3), drying the applied slurry until the cathode is formed (stage 4), and compacting the cathode to the required density of $3.7\ g/cm^2$ (stage 5). The cathode properties were determined by assembling a cell with a Li cathode and the Li reference electrode, and an electrolyte, which is a 1 M solution of $LiPF_6$ in the mixture of propylene carbonate:ethyl methyl carbonate: dimethyl carbonate solvents with a volume ratio of 1:1:1 and additional 5% v/v of vinyl carbonate. The initial specific capacity of the cathode at a discharge current of 0.02 A/g of the cathode material is 185 mA h/g of the cathode material.

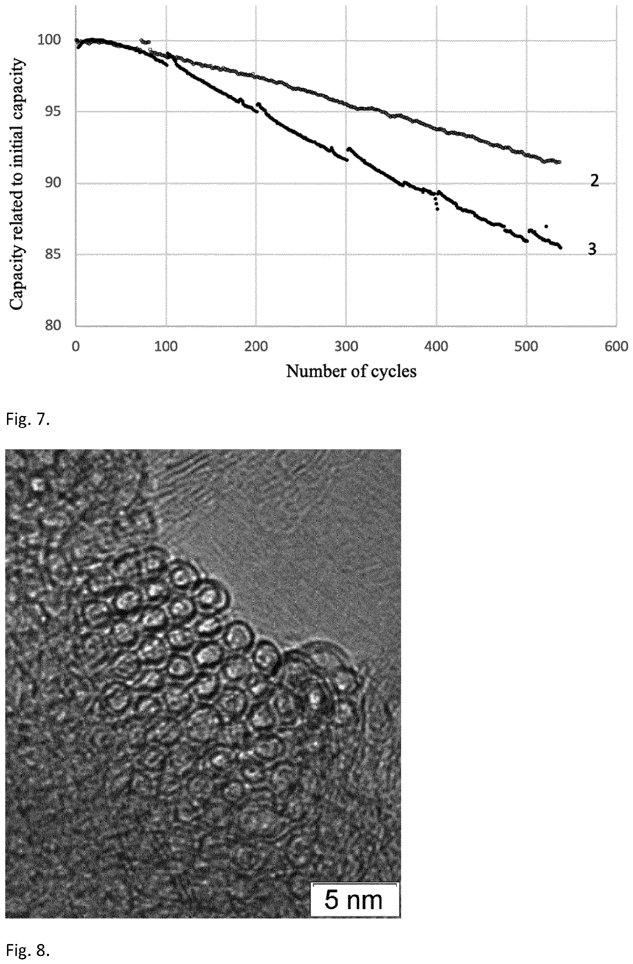

A lithium-ion battery was assembled from the obtained cathode and anode having graphite as the active material. A 25 μm thick polypropylene separator was used. A 0.8 M solution of $LiPF_6$ in the mixture of propylene carbonate:ethyl methyl carbonate:dimethyl carbonate solvents in a volume ratio of 1:1:1 with additional 1% v/v of vinyl carbonate was used as an electrolyte. The initial battery capacity at a discharge rate of 0.1 C was 1520 mA·h. The dependence of capacity (referred to the initial capacity) on the number of charge-discharge cycles (charge current 1500 mA, discharge current 1500 mA) is shown in **FIG. 7**, set of points 2. The battery capacity is more than 90% of the initial capacity after 500 cycles.

Example 3.

The dispersion is similar to the one described in Example 2 but contains a mixture of single-walled and double-walled carbon nanotubes with diameters from 1.2 to 2.8 nm and a mean diameter of 1.8 nm (the diameter was determined by TEM of the dry suspension matter and by the positions of the radial breathing mode (RBM) lines in the Raman spectra). The intensity ratio of the G/D lines in the Raman spectrum of light with a wavelength of 532 nm is 34. The availability of double-walled carbon nanotubes bundled together with single-walled carbon nanotubes is confirmed by the electron micrographs provided in **FIG. 8**. The concentration of carbon nanotubes in the dispersion is 0.4 wt.%. The dispersion also contains 0.6 wt.% of hydrogenated nitrile butadiene rubber Therban® 3406. The weight ratio of single-walled and double-walled carbon nanotubes to HNBR in the slurry is 0.667.

The dispersion was produced by mixing the required proportions of NMP, HNBR, and a mixture of SWCNTs and DWCNTs, and 32-fold dispersing in a NETZSCH Omega 500 high-pressure homogenizer at a pressure of 65 MPa and a dispersion transfer rate of 300 kg/h (stage D). An estimated shear rate in the nozzle is about $9 \cdot 10^5\ s^{-1}$. The power consumption was 8 kW, the specific input energy at the stage (D) was about 27 W-h/kg. Between each two dispersion stages (D), the dispersion was held in a 50 liter tank at rest and agitated slowly by a gate agitator and at a shear rate of

about 1 s$^{-1}$ for 10 minutes (stage R).

The dispersion is characterized by the dependence of viscosity (Pa·s) on shear rate (s$^{-1}$) provided in **FIG. 3** as diamonds (curve 3). The viscosity was measured at a constant temperature of 25 °C using a Brookfield DV2-TLV viscometer with an SC4-21 spindle. The dependence of viscosity on shear rate is well described by the Ostwald-de Waele power law in a range from 0.093 s$^{-1}$ to 46.5 s$^{-1}$. The flow behavior index n is 0.13, and the flow consistency index is 7.3 Pa·s$^{0.13}$. The dispersion viscosity in the area of low shear rates of less than 1/6.3 s$^{-1}$ is more than 37 Pa·s, and it is less than 0.6 Pa·s in the area of shear rates of more than 18.6 s$^{-1}$.

Complex modulus measurements taken on an Anton Paar MCR302 rheometer on the cone-and-plate cell with a cone angle of 1° and an oscillation frequency of 1 Hz showed that, with an oscillation amplitude ranging from 0.05 to 0.1° corresponding to shear strains from 5 to 10%, the loss modulus G" is from 35 to 40 Pa, which means a high viscosity of the dispersion at relative rest, and the phase angle is from 20° to 26°, which characterizes the dispersion as a viscoelastic non-ideal fluid.

The main dispersion parameters are given in the summary Table.

The dispersion was used to produce the cathode slurry containing 73.9 wt.% of active material LiNi$_{0.8}$Mn$_{0.1}$Co$_{0.1}$O$_2$ (NMC811), 25.2 wt.% of NMP solvent, 0.75 wt.% of polyvinylidene fluoride (PVDF) binder, 0.09 wt.% of hydrogenated nitrile butadiene rubber Therban® 3406, and 0.06 wt.% of single-walled and double-walled carbon nanotubes. The cathode slurry was produced by the sequence of stages:

- adding 100 g of a solution containing 6 g of polyvinylidene fluoride (PVDF) binder and 94 g of NMP to 120 g of the dispersion, mixing on an overhead stirrer for 30 min-an additional stage of adding binder and solvent carried out before stage (1);
- mixing the resultant mixture with 300 g of active material LiNi$_{0.8}$Mn$_{0.1}$Co$_{0.1}$O$_2$ (NMC811), agitating for 30 min, adding 292.8 g of active material LiNi$_{0.8}$Mn$_{0.1}$Co$_{0.1}$O$_2$ (NMC811) to the resultant mixture-stage (1);
- agitating for 16 hours to produce a homogeneous slurry-stage (2).

With both single-walled/double-walled carbon nanotubes and HNBR in the dispersion used to produce the slurry, the resultant cathode slurry also has a sharply pronounced dependence of viscosity on shear rate, as demonstrated in **FIG. 4** (diamond markers, curve 3). The flow behavior index n is 0.1, and the flow consistency index is 13 Pa·s$^{0.1}$. The viscosity measured at a shear rate of 46.5 s$^{-1}$ is 0.41 Pa s, and the dependence extrapolation to a shear rate of 100 s$^{-1}$ gives a viscosity estimate of about 0.21 Pa·s. Such low viscosity provides process capacity for the application to the current collector plate. At shear rates of less than 1 s$^{-1}$, the viscosity is more than 13 Pa·s, which ensures the slurry stability during storage before use, and the stability of the slurry layer on the current collector before drying.

The storage stability of the slurry was determined by the changing distribution of the solid particle content along the height of the slurry layer after the slurry storage in a 50 ml cylindrical test tube with a diameter of 30 mm. For this purpose, the slurry was placed in the test tube, closed with a lid, and kept for 7 days under standard conditions (atmospheric pressure, 25 °C). After that, the upper third, the middle third, and the lower third of the test tube were collected with a pipette, and the weight fractions of the solvent and solid non-volatile components in the samples were determined by drying. For the cathode slurry of this Example, the solvent content in the initial slurry was 25.2 wt.%, after one-week storage, the solvent content was 25.7 wt.% in the upper third, 25.0 wt.% - in the middle part, and 24.8 wt.% - in the lower part. The difference from the initial solvent content does not exceed 2% relative, which is significantly less than for the slurry described below in Comparative Example 8, and it is indicative of high stability of the resultant slurry.

The lithium-ion battery cathode was produced by applying the resultant slurry to the current collector (stage 3), drying the applied slurry until the cathode is formed (stage 4), and compacting the cathode to the required density of 3.8 g/cm$^2$ (stage 5). The cathode properties were determined by assembling a cell with a Li anode and the Li reference electrode, and an electrolyte, which is a 1 M solution of LiPF$_6$ in the mixture of propylene carbonate:ethyl methyl carbonate: dimethyl carbonate solvents with a volume ratio of 1:1:1 and additional 5% v/v of vinyl carbonate. The initial specific capacity of the cathode at a discharge current of 0.02 A/g of the cathode material is 197 mA h/g of the cathode material.

A lithium-ion battery was assembled from the obtained cathode and anode having graphite as the active material. A 25 μm thick polypropylene separator was used. A 0.8 M solution of LiPF$_6$ in the mixture of propylene carbonate:ethyl methyl carbonate:dimethyl carbonate solvents in a volume ratio of 1:1:1 with additional 1% v/v of vinyl carbonate was used as an electrolyte. The initial battery capacity at a discharge rate of 0.1 C was 1650 mA·h. The dependence of capacity (referred to the initial capacity) on the number of charge-discharge cycles (charge current 1650 mA, discharge current 1650 mA) is shown in **FIG. 7**, set of points 3. The battery capacity is more than 85% of the initial capacity after 500 cycles.

Example 4.

The dispersion contains 0.3 wt.% of hydrogenated nitrile butadiene rubber Therban® 3406 with a viscosity of

$ML_{(1+4)}$ 100 °C 63 Mooney units, with a content of nitrile units 34 wt.%, with a residual content of polybutadiene units of less than 0.9 wt.%, and the content of units obtained by hydrogenation of conjugated diene units 65 wt.%, and 0.9 wt.% of single-walled carbon nanotubes and agglomerates thereof in dimethyl sulfoxide (DMSO). The dispersion was produced using Tuball™ SWCNTs modified with chlorine, same as in Example 1. The SWCNT diameter is distributed in a range of 1.2 to 2.1 nm with a mean diameter of 1.54 nm, the G/D line intensity ratio is 81, and the specific surface area determined from nitrogen adsorption isotherms is 1220 m$^2$/g, the content of chlorine in Tuball SWCNTs is 0.24 wt.%. The inductively coupled plasma atomic emission spectroscopy (ICP-AES) shows that the SWCNTs contain an impurity of 0.46 wt.% of Fe, the Group 8 metal. See **FIG. 1** for the transmission electron micrographs of the single-walled carbon nanotubes used. The weight ratio of single-walled carbon nanotubes to HNBR in the slurry is 3.

The dispersion was produced by mixing the required proportions of DMSO, HNBR and SWCNT and 15-fold repeating the alternating stages: dispersing in a rotary pulsation apparatus (RPA) with a power consumption of 32 kW, a rotor diameter of 190 mm, a gap between the rotor and the stator of 700 $\mu$m, and a rotor speed of 2940 rpm, ultrasonic treatment in a 100 liter tank at a frequency of 40 kHz and the acoustic input power of the sonotrode 1600 W, and at rest in a 220 liter tank while agitating slowly by an anchor agitator at 30 rpm and a shear rate of about 2 s$^{-1}$. The rate of dispersion circulation between the RPA, the ultrasonic dispersion apparatus and the tank is 1000 kg/h; about 32 W·h/kg of energy is applied to the dispersion in the RPA at the dispersion stage (D); about 1.8 W·h/kg is applied to the dispersion at the ultrasonic treatment stage (D); the mean tank residence time of the dispersion at a shear rate of about 2 s$^{-1}$ is about 13 minutes at the stage (R).

Single-walled carbon nanotubes are agglomerated into bundles. The size distribution (carbon nanotubes and agglomerates thereof) was determined by Dynamic Light Scattering (DLS) of the dispersion diluted to a SWCNT concentration of 0.001 wt.% of the dispersion. The distribution of the volume fraction of nanotube bundles is bimodal, with the hydrodynamic diameters ranging from 300 to 1100 nm and 4 to 8 $\mu$m. The first and most intense maximum is described by the lognormal hydrodynamic diameter distribution of the volume fraction of bundles with a mode at $D_{hm}$ = 520 nm, and the second mode $D_{hm2}$ of ca. 5.5 $\mu$m.

The dispersion viscosity was measured at a constant temperature of 25 °C using a Brookfield DV2-TLV viscometer with an SC4-21 spindle. The dependence of viscosity on shear rate is well described by the Ostwald-de Waele power law in a range from 0.093 s$^{-1}$ to 186 s$^{-1}$. The flow behavior index n is 0.16, and the flow consistency index is 21 Pa·s$^{0.16}$. The dispersion viscosity in the area of low shear rates of less than 1/6.3 s$^{-1}$ is more than 98 Pa·s, and it is less than 1.8 Pa s in the area of shear rates of more than 18.6 s$^{-1}$.

Complex modulus measurements taken on an Anton Paar MCR302 rheometer on the cone-and-plate cell with a cone angle of 1° and an oscillation frequency of 1 Hz showed that, with an oscillation amplitude ranging from 0.05° to 0.1° corresponding to shear strains from 5 to 10%, the loss modulus G" is from 74 to 102 Pa, which means a high viscosity of the dispersion at relative rest, and the phase angle is from 41° to 50°, which characterizes the dispersion as a viscoelastic non-ideal fluid.

The main dispersion parameters are given in the summary Table.

The dispersion was used to produce the cathode slurry containing 71.4 wt.% of active material LiNi$_{0.6}$Mn$_{0.2}$Co$_{0.2}$O$_2$ (NMC622), 28.5 wt.% of DMSO, 0.021 wt.% of hydrogenated nitrile butadiene rubber Therban® 3406, and 0.064 wt.% of single-walled carbon nanotubes. The cathode slurry was produced by the sequence of stages:

- mixing 120 g of active material LiNi$_{0.6}$Mn$_{0.2}$Co$_{0.2}$O$_2$ (NMC622) with 20 g of the dispersion and 60 g of DMSO (introducing an additional amount of solvent at stage (1)), agitating for 30 min, adding another 80 g of active material LiNi$_{0.6}$Mn$_{0.2}$Co$_{0.2}$O$_2$ (NMC622) to the resultant mixture-stage (1);
- agitating for 16 hours to produce a homogeneous slurry-stage (2).

The weight ratio of single-walled carbon nanotubes to HNBR is 1. With both the single-walled carbon nanotubes and HNBR present, the resultant cathode slurry has a sharply pronounced dependence of viscosity on shear rate. The flow behavior index is 0.14, and the flow consistency index is 22 Pa·s$^{0.14}$. The viscosity measured at a shear rate of 46.5 s$^{-1}$ is 0.82 Pa·s, and the dependence extrapolation to a shear rate of 100 s$^{-1}$ gives a viscosity estimate of about 0.42 Pa s, which provides process capacity for the application to the current collector plate. At shear rates of less than 1 s$^{-1}$, the viscosity is more than 22 Pa·s, which ensures the slurry stability during storage before use, and the stability of the slurry layer on the current collector before drying.

The storage stability of the slurry was determined by the changing distribution of the solid particle content along the height of the slurry layer after the slurry storage in a 50 ml cylindrical test tube with a diameter of 30 mm. For this purpose, the slurry was placed in the test tube, closed with a lid, and kept for 7 days under standard conditions (atmospheric pressure, 25 °C). After that, the upper third, the middle third, and the lower third of the test tube were collected with a pipette, and the weight fractions of water and solid non-volatile components in the samples were determined by drying. For the cathode slurry of this Example, the DMSO content in the initial slurry was 28.5 wt.%, after one-week storage, the solvent content was 27.8 wt.% in the lower third, 28.4 wt.% - in the middle part, and 29.3 wt.% - in the upper part.

The difference from the initial solvent content does not exceed 3.% relative, which indicates high stability of the resultant slurry.

The lithium-ion battery cathode was produced by applying the resultant slurry to the current collector (stage 3), drying the applied slurry until the cathode is formed (stage 4), and compacting the cathode to the required density of 3.6 g/cm$^2$ (stage 5). The cathode properties were determined by assembling a cell with a Li anode and the Li reference electrode, and an electrolyte, which is a 1 M solution of LiPF6 in the mixture of propylene carbonate:ethyl methyl carbonate: dimethyl carbonate solvents with a volume ratio of 1:1:1 and additional 5% v/v of vinyl carbonate. The initial specific capacity of the cathode at a discharge current of 0.017 A/g of the cathode material is 176 mA h/g of the cathode material.

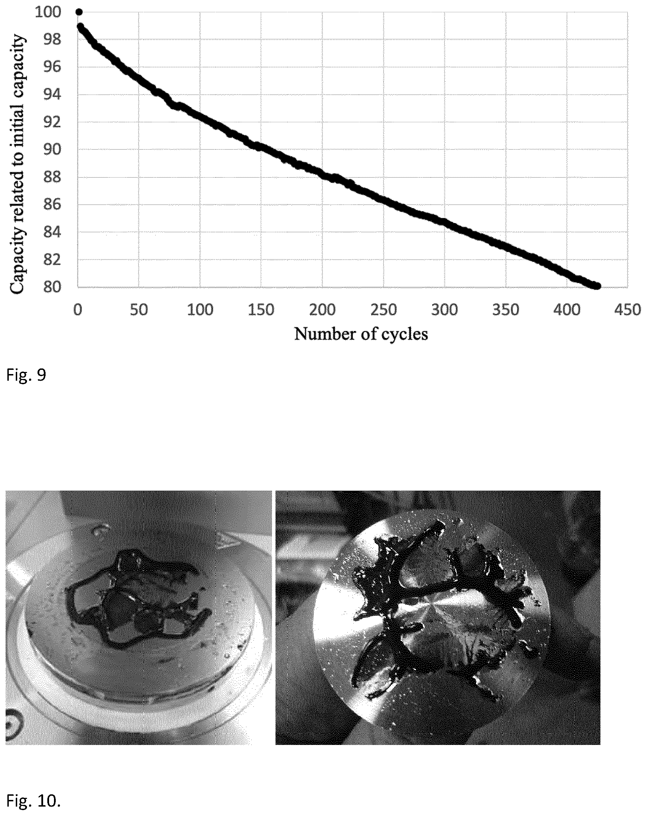

A lithium-ion battery was assembled from the obtained cathode and anode having graphite as the active material. A 25 $\mu$m thick polypropylene separator was used. A 0.8 M solution of LiPF$_6$ in the mixture of propylene carbonate:ethyl methyl carbonate:dimethyl carbonate solvents in a volume ratio of 1:1:1 with additional 1% v/v of vinyl carbonate was used as an electrolyte. The initial battery capacity at a discharge rate of 0.1 C was 1200 mA·h. The dependence of capacity (referred to the initial capacity) on the number of charge-discharge cycles (charge current 600 mA, discharge current 1200 mA) is shown in **FIG. 9.** The battery capacity is more than 80% of the initial capacity after 400 cycles.

Example 5.

The dispersion contains 0.4 wt.% of partially hydrogenated nitrile butadiene rubber Therban® LT 2057 with a viscosity of ML$_{(1+4)}$ 100 °C 67 Mooney units, with a content of nitrile units 21 wt.%, with a residual content of polybutadiene units of 5.5 wt.%, and the content of units obtained by hydrogenation of conjugated diene units 73.5 wt.%, and 0.4 wt.% of single-walled carbon nanotubes and agglomerates thereof in dimethylacetamide (DMAA). The dispersion was produced using Tuball™ SWCNTs subjected to multistage chemical treatment and boiling in nitric acid for 4 hours. The inductively coupled plasma atomic emission spectroscopy (ICP-AES) shows that the content of Fe in the SWCNTs is 600 ppm or 0.06 wt.%. The potentiometric titration shows that the SWCNT surface after such treatment contains about 0.62 wt.% of carboxyl groups. The SWCNT diameter is distributed in a range of 1.2 to 2.1 nm with a mean diameter of 1.60 nm, the G/D line intensity ratio is 24, and the specific surface area determined from nitrogen adsorption isotherms is 1280 m$^2$/g. The weight ratio of single-walled carbon nanotubes to HNBR in the slurry is 1.

The dispersion was produced by mixing the required proportions of DMAA, HNBR, and SWCNTs and 6-fold dispersing in a NETZSCH Omega 500 high-pressure homogenizer at a pressure of 45 MPa and a dispersion transfer rate of 500 kg/h. An estimated shear rate in the nozzle is about 10$^6$ s$^{-1}$. The power consumption was 5.8 kW, the specific input energy at the stage (D) was about 11.6 W·h/kg. Between each two dispersion stages, the dispersion was held in a 65 liter tank at rest and agitated slowly by a gate agitator and at a shear rate of about 3 s$^{-1}$ for 7 minutes.

The viscosity was measured at a constant temperature of 25°C using a Brookfield DV2-TLV viscometer with an SC4-21 spindle. The dependence of viscosity on shear rate is well described by the Ostwald-de Waele power law in a range from 0.093 s$^{-1}$ to 186 s$^{-1}$. The flow behavior index n is 0.26, and the flow consistency index is 14.5 Pa·s$^{0.26}$. The dispersion viscosity in the area of low shear rates of less than 1/6.3 s$^{-1}$ is more than 56 Pa·s, and it is less than 1.7 Pa·s in the area of shear rates of more than 18.6 s$^{-1}$.

Single-walled carbon nanotubes in the dispersion are agglomerated into bundles. The size distribution of the number of carbon nanotube bundles was determined by Dynamic Light Scattering (DLS) of the dispersion diluted with NMP to a SWCNT concentration of 0.001 wt.%. The hydrodynamic diameter distribution of the number of particles (nanotubes and their bundles) in the dispersion obtained by DLS method using a Malvern Zetasizer ZS device is shown by the curve with square markers in **FIG. 2. FIG. 2** shows that the size distribution of the volume fraction of nanotubes and agglomerates thereof is trimodal, with the hydrodynamic diameters ranging from 100 to 600 nm, 600 to 1100 nm, and 5 to 9 $\mu$m. The first and most intense maximum is described by the lognormal hydrodynamic diameter distribution of the volume fraction of nanotubes and agglomerates thereof with a mode at D$_{hm}$ = 295 nm, the second maximum with a mode D$_{h2m}$ of about 900 nm, and the third mode D$_{h3m}$ of about 6.5 $\mu$m is indicative of large agglomerates (bundles) of single-walled carbon nanotubes with a length of more than 30 $\mu$m.

The availability of single-walled carbon nanotube agglomerates with a size of more than 10 $\mu$m is manifested by rapid segregation of the dispersion into a solvent with a low content of single-walled carbon nanotubes and a highly concentrated gel of single-walled carbon nanotubes and HNBR, at an oscillating shear strain with a frequency of 1 Hz in a cone-and-plate rheometer cell, e.g., in the cone-and-plate rheometer cell with a cone angle of 1° at a relative shear strain amplitude of 100% or more, as shown in **FIG. 10** (measuring plate on the left, measuring cone on the right).

The main dispersion parameters are given in the summary Table.

The dispersion was used to produce the cathode slurry containing 60.8 wt.% of active material LiNi$_{0.33}$Mn$_{0.33}$Co$_{0.33}$O$_2$ (NMC11), 38.2 wt.% of dimethylacetamide (DMAA) solvent, 0.91 wt.% of polyvinylidene fluoride (PVDF) binder, 0.024 wt.% of hydrogenated nitrile butadiene rubber Therban® LT 2057, and 0.024 wt.% of single-walled carbon nanotubes. The cathode slurry was produced by the sequence of stages:

- adding 272.5 g of a solution containing 7.5 g of polyvinylidene fluoride (PVDF) binder and 265 g of DMAA to 50 g of the dispersion, mixing on an overhead stirrer for 30 min-an additional stage of adding binder and solvent implemented before stage (1);
- mixing the resultant mixture with 300 g of active material $LiNi_{0.33}Mn_{0.33}Co_{0.33}O_2$ (NMC11), agitating for 30 min, adding another 200 g of active material $LiNi_{0.33}Mn_{0.33}Co_{0.33}O_2$ (NMC11) to the resultant mixture-stage (1);
- agitating for 16 hours to produce a homogeneous slurry-stage (2).

The lithium-ion battery cathode was produced by applying the resultant slurry to the current collector (stage 3), drying the applied slurry until the cathode is formed (stage 4), and compacting the cathode to the required density of 3.5 $g/cm^2$ (stage 5). The cathode properties were determined by assembling a cell with a Li anode and the Li reference electrode, and an electrolyte, which is a 1 M solution of $LiPF_6$ in the mixture of propylene carbonate:ethyl methyl carbonate: dimethyl carbonate solvents with a volume ratio of 1:1:1 and additional 5% v/v of vinyl carbonate. The initial specific capacity of the cathode at a discharge current of 0.015 A/g of the cathode material is 151 mA h/g of the cathode material.

A lithium-ion battery was assembled from the obtained cathode and anode having graphite as the active material. A 25 $\mu$m thick polypropylene separator was used. A 0.8 M solution of $LiPF_6$ in the mixture of propylene carbonate:ethyl methyl carbonate:dimethyl carbonate solvents in a volume ratio of 1:1:1 with additional 1% v/v of vinyl carbonate was used as an electrolyte. The initial battery capacity at a discharge rate of 0.1 C was 950 mA·h. The battery capacity is more than 85.3% of the initial capacity after 500 charge-discharge cycles (charge current 950 mA, discharge current 950 mA).

Example 6.

The dispersion contains 2 wt.% of partially hydrogenated nitrile butadiene rubber Therban® LT 2057 with a viscosity of $ML_{(1+4)}$ 100 °C 67 Mooney units, with a content of nitrile units 21 wt.%, with a residual content of polybutadiene units of 5.5 wt.%, and the content of units obtained by hydrogenation of conjugated diene units 73.5 wt.%, and 0.2 wt.% of single-walled carbon nanotubes and agglomerates thereof in ethylene carbonate. The single-walled carbon nanotubes used for producing the dispersion are Tuball™ SWCNTs. The SWCNT diameter is distributed in a range of 1.2 to 2.1 nm with a mean diameter of 1.54 nm, the G/D line intensity ratio is 63, and the specific surface area determined from nitrogen adsorption isotherms is 1240 $m^2$/g. The SWCNTs for producing the dispersion were further modified with chlorine by the method described in RU 2717516 C2. The energy dispersion spectroscopy shows that the chlorine content in the Tuball SWCNT is 0.15 wt.%. The inductively coupled plasma atomic emission spectroscopy (ICP-AES) shows that the content of Fe in the SWCNTs is 0.68 wt.%. The weight ratio of single-walled carbon nanotubes to HNBR in the slurry is 0.1.

The dispersion was produced by mixing 4890 g of ethylene carbonate, 100 g of HNBR, and 10 g of SWCNTs in a tank thermostatted at 50°C and alternating 35 stages of ultrasonic dispersion (D) with a sonotrode having an ultrasound frequency of 22 kHz and an acoustic power of 800 W immersed in the dispersion for 2 minutes and 34 resting stages (R) lasting 2 minutes each, during which the ultrasound was turned off, and the dispersion was slowly agitated by a blade impeller at a shear rate of less than 0.5 $s^{-1}$. The specific input energy at each stage (D) was about 5.3 Wh/kg.

Single-walled carbon nanotubes are agglomerated into bundles. The size distribution of the number of bundles of carbon nanotubes was determined by Dynamic Light Scattering (DLS) of the dispersion diluted to the SWCNT concentration of 0.001 wt.%. The hydrodynamic diameter distribution of the volume fraction of particles (nanotubes and their bundles) in the dispersion is wide, with the hydrodynamic diameters ranging from 200 nm to 3 $\mu$m, with a mode at $D_{hm}$ = 380 nm.

The dispersion viscosity was measured at a constant temperature of 40 +/- 1°C (above the ethylene carbonate melting point) using a Brookfield DV2-TLV viscometer with an SC4-21 spindle. The dependence of viscosity on shear rate is described by the Ostwald-de Waele power law in a range from 0.093 $s^{-1}$ to 100 $s^{-1}$. The flow behavior index n is 0.03, and the flow consistency index is 3.4 $Pa·s^{0.03}$. The dispersion viscosity in the area of low shear rates of less than 1/6.3 $s^{-1}$ is more than 20.3 Pa·s, and it is less than 0.2 Pa s in the area of shear rates of more than 18.6 $s^{-1}$.

The main dispersion parameters are given in the summary Table.

The dispersion was used to produce the cathode slurry containing 65.93 wt.% of active material $LiNi_{0.33}Mn_{0.33}Co_{0.33}O_2$ (NMC111), 32.6 wt.% of ethylene carbonate solvent, 0.67 wt.% of hydrogenated nitrile butadiene rubber Therban® LT 2057, and 0.07 wt.% of single-walled carbon nanotubes. The cathode slurry was produced by the sequence of stages:

- mixing 73.35 g of the dispersion with 100 g of active material $LiNi_{0.33}Mn_{0.33}Co_{0.33}O_2$ (NMC11) at a temperature of 50°C, agitating for 30 min, adding another 48.35 g of active material $LiNi_{0.33}Mn_{0.33}Co_{0.33}O_2$ (NMC11) to the resultant mixture-stage (1);
- agitating for 16 hours at a temperature of 50 °C to produce a homogeneous slurry-stage (2).

The lithium-ion battery cathode was produced by applying the resultant slurry to the current collector, drying the applied slurry until the cathode is formed, and compacting the cathode to the required density of 3.5 g/cm$^2$. The cathode properties were determined by assembling a cell with a Li anode and the Li reference electrode, and an electrolyte, which is a 1 M solution of LiPF$_6$ in the mixture of propylene carbonate:ethyl methyl carbonate:dimethyl carbonate solvents with a volume ratio of 1:1:1 and additional 5% v/v of vinyl carbonate. The initial specific capacity of the cathode at a discharge current of 0.015 A/g of the cathode material is 152 mAh/g of the cathode material.

A lithium-ion battery was assembled from the obtained cathode and anode having graphite as the active material. A 25 μm thick polypropylene separator was used. A 0.8 M solution of LiPF$_6$ in the mixture of propylene carbonate:ethyl methyl carbonate:dimethyl carbonate solvents in a volume ratio of 1:1:1 with additional 1% v/v of vinyl carbonate was used as an electrolyte. The initial battery capacity at a discharge rate of 0.1 C was 2230 mA·h. The battery capacity is more than 85.8% of the initial capacity after 500 charge-discharge cycles (charge current 2230 mA, discharge current 2230 mA).

Example 7.

The dispersion contains 0.2 wt.% of partially hydrogenated nitrile butadiene rubber Therban® 3496 with a viscosity of ML$_{(1+4)}$ 100 °C 55 Mooney units, with a content of nitrile units 34 wt.%, with a residual content of polybutadiene units of 18 wt.%, and the content of units obtained by hydrogenation of conjugated diene units 48 wt.%, and 2 wt.% of single-walled carbon nanotubes and agglomerates thereof in the solution containing N-methyl-2-pyrrolidone (NMP) and dimethyl sulfoxide (DMSO) in a ratio of 1:1 wt. The single-walled carbon nanotubes used for producing the dispersion are Tuball™ SWCNTs. The SWCNT diameter is distributed in a range of 1.2 to 2.1 nm with a mean diameter of 1.62 nm, the G/D line intensity ratio is 46, and the specific surface area determined from nitrogen adsorption isotherms is 580 m$^2$/g. The thermogravimetry data in the 5% oxygen flow in Ar show that the ash residue after the material oxidation at 950 °C is about 20 wt.%. Ash residue contains predominantly iron oxide Fe$_2$O$_3$. The X-ray diffraction data show that the SWCNTs contain a nanodispersed metallic iron phase. The energy dispersive spectroscopy data show that the Fe content in the SWCNTs is 14.2 wt.%, which is consistent with the ash residue weight data. The weight ratio of single-walled carbon nanotubes to HNBR in the slurry is 10.

The dispersion was produced by mixing the required proportions of water, polyvinylpyrrolidone and SWCNT, and 32-fold circulating the dispersion at a dispersion transfer rate of 200 kg/h between the Chaoli GJB500 high-pressure disperser (stage (D)) at a pressure of 30 MPa and the 65 liter tank where the dispersion was at rest (stage (R)) while being agitated slowly by a gate agitator at a shear rate of about 2 s$^{-1}$. The estimated shear rate in the disperser is over 150000 s$^{-1}$, the measured power consumption was 11.4 kW. The specific input energy in the dispersion cycle is about 57 W-h/kg. The mean tank residence time at the stage (R) was about 20 minutes.

Single-walled carbon nanotubes in the dispersion are agglomerated into bundles. The size distribution (carbon nanotubes and agglomerates thereof) was determined by Dynamic Light Scattering (DLS) of the dispersion diluted to a SWCNT concentration of 0.001 wt.% of the dispersion. The distribution of the volume fraction of nanotube bundles is bimodal, with the hydrodynamic diameters ranging from 300 to 1100 nm and 5 to 9 μm. The first and most intense maximum is described by the lognormal hydrodynamic diameter distribution of the volume fraction of bundles with a mode at D$_{hm}$ = 560 nm.

The dispersion viscosity was measured at a constant temperature of 25 °C using a Brookfield DV2-TLV viscometer with an SC4-21 spindle. The dependence of viscosity on shear rate is described by the Ostwald-de Waele power law in a range from 0.093 s$^{-1}$ to 100 s$^{-1}$. The flow behavior index n is 0.37, and the flow consistency index is 12 Pa·s$^{0.37}$. The dispersion viscosity in the area of low shear rates of less than 1/6.3 s$^{-1}$ is more than 38 Pa·s, and it is less than 1.9 Pa·s in the area of shear rates of more than 18.6 s$^{-1}$.

Complex modulus measurements taken on an Anton Paar MCR302 rheometer on the cone-and-plate cell with a cone angle of 1° and an oscillation frequency of 1 Hz showed that, with an oscillation amplitude ranging from 0.05 to 0.1° corresponding to shear strains from 5 to 10%, the loss modulus G" is from 90 to 112 Pa, which means a high viscosity of the dispersion at relative rest, and the phase angle is from 32° to 35°, which characterizes the dispersion as a viscoelastic non-ideal fluid.

The main dispersion parameters are given in the summary Table.

The dispersion was used to produce the cathode slurry containing 57.04 wt.% of active material LiNi$_{0.33}$Mn$_{0.33}$Co$_{0.33}$O$_2$ (NMC11), 41.4 wt.% of the mixture of N-methyl-2-pyrrolidone (NMP) and dimethyl sulfoxide (DMSO) solvents in a weight ratio of 1:1, 1.17 wt.% of polyvinylidene fluoride (PVDF) binder, 0.01 wt.% of hydrogenated nitrile butadiene rubber Therban® LT 2057, and 0.09 wt.% of single-walled carbon nanotubes. The cathode slurry was produced by the sequence of stages:

- adding 702 g of a solution containing 7.5 g of polyvinylidene fluoride (PVDF) binder and 700 g of a mixture of NMP and DMSO solvents in a weight ratio of 1:1 (6.82 g), mixing on an overhead stirrer for 30 min-an additional binder and solvent adding stage implemented before stage (1);

- mixing the resultant mixture with 700 g of active material $LiNi_{0.33}Mn_{0.33}Co_{0.33}O_2$ (NMC11), agitating for 30 min, adding another 273.5 g of active material $LiNi_{0.33}Mn_{0.33}Co_{0.33}O_2$ (NMC11) to the resultant mixture-stage (1);
- agitating for 16 hours to produce a homogeneous slurry-stage (2).

The lithium-ion battery cathode was produced by applying the resultant slurry to the current collector (stage 3), drying the applied slurry until the cathode is formed (stage 4), and compacting the cathode to the required density of 3.5 $g/cm^2$ (stage 5). The cathode properties were determined by assembling a cell with a Li anode and the Li reference electrode, and an electrolyte, which is a 1 M solution of $LiPF_6$ in the mixture of propylene carbonate:ethyl methyl carbonate: dimethyl carbonate solvents with a volume ratio of 1:1:1 and additional 5% v/v of vinyl carbonate. The initial specific capacity of the cathode at a discharge current of 0.015 A/g of the cathode material is 149 mA·h/g of the cathode material.

A lithium-ion battery was assembled from the obtained cathode and anode having graphite as the active material. A 25 $\mu$m thick polypropylene separator was used. A 0.8 M solution of $LiPF_6$ in the mixture of propylene carbonate:ethyl methyl carbonate:dimethyl carbonate solvents in a volume ratio of 1:1:1 with additional 1% v/v of vinyl carbonate was used as an electrolyte. The initial battery capacity at a discharge rate of 0.1 C was 3500 mA·h. The battery capacity is more than 82.4% of the initial capacity after 700 charge-discharge cycles (charge current 3500 mA, discharge current 3500 mA).

Example 8 (Comparative).

The dispersion contains 1.2 wt.% of single-walled carbon nanotubes and agglomerates thereof in N-methyl-2-pyrollidone (NMP). The dispersion was produced with the same SWCNT Tuball™ single-walled carbon nanotubes as those used to produce the dispersions of Examples 1 and 4: the mean diameter is 1.54 nm; the intensity ratio of the G/D lines in the Raman spectrum with a wavelength of 532 nm is 80; the specific surface area is 1220 $m^2$/g; the chlorine content is 0.25 wt.%; the iron impurity content is 0.46 wt.%. The dispersion contains no HNBR. The dispersion was produced similarly to Example 1.

The dispersion is characterized by dependence of viscosity (Pa s) on shear rate ($s^{-1}$) provided in FIG. 3 as dark triangles (curve 8). The dependence of viscosity on shear rate is well described by the Ostwald-de Waele power law in a range from 0.093 $s^{-1}$ to 93 $s^{-1}$. The flow behavior index n is 0.63, and the flow consistency index is 3.0 Pa·$s^{0.63}$. The flow behavior index is much higher than for the dispersions containing both SWCNTs and HNBR. This manifests in a much flatter dependence of viscosity on of shear rate. The dispersion viscosity in the area of low shear rates of about 1/6.3 $s^{-1}$ is about 13 Pas, and it is about 2.2 Pa s in the area of shear rates of about 18.6 $s^{-1}$. Thus, the viscosity at high shear rates is significantly greater than for the dispersions containing both SWCNTs and HNBR, and at low shear rates it is much lower than for the dispersions containing both SWCNTs and HNBR. Example 9 below demonstrates that the observed difference cannot be explained by a simple additive effect of adding HNBR to the dispersion, but is due to the synergistic effect of having both SWCNTs and HNBR on the rheological properties of the dispersion.

Complex modulus measurements taken on an Anton Paar MCR302 rheometer on the cone-and-plate cell with a cone angle of 1° and an oscillation frequency of 1 Hz showed that, with an oscillation amplitude ranging from 0.05° to 0.1° corresponding to shear strains from 5 to 10%, the loss modulus G" is from 21 to 26 Pa, which means an insufficient viscosity of the dispersion at relative rest, and the phase angle is from 14° to 17°.

The dispersion was used to produce the cathode slurry with its composition and production sequence similar to Example 1, except that the dispersion contains hydrogenated nitrile butadiene rubber. Due to higher concentration of SWCNTs in the dispersion, the amount of dispersion added was 3-fold less to maintain the same ratio of SWCNTs to the active material of the cathode, the corresponding amount of solvent was additionally introduced.

The cathode slurry was produced by the sequence of stages: adding another 10 g of the solution containing 1 g of polyvinylidene fluoride (PVDF) in 9 g of NMP to 5 g of the dispersion, mixing on an overhead stirrer for 30 min; mixing the resultant mixture with 98.83 g of active material $LiNiCoAlO_2$ (NCA) for 30 minutes; adding 1 g of acetylene black and another 15 g of solvent to the resultant mixture and agitating for 16 hours to produce a homogeneous slurry.

The dependence of viscosity of the resultant anode slurry on shear rate is illustrated by dark triangles (curve 8) in FIG. 4. This dependence is described by the Ostwald-de Waele power law with a flow behavior index n = 0.43 and a flow consistency index is 4.7 Pa·$s^{0.43}$. The slurry viscosity is about 4.7 Pas at shear rates of about 1 $s^{-1}$. This viscosity, as shown by the slurry storage stability studies and cathode application experiments, is not enough to achieve the necessary technical result, which is no delamination of the cathode slurry during storage and high quality of the cathode obtained by applying the slurry to the current collector.

The storage stability of the slurry was determined by the changing distribution of the solid particles content along the height of the slurry layer after the slurry storage in a 50 ml cylindrical test tube with a diameter of 30 mm. For this purpose, the slurry was placed in the test tube, closed with a lid, and kept for 7 days under standard conditions (atmospheric pressure, 25 °C) and analyzed similarly to the procedure described in Example 1. A turbid supernatant layer of about 4 mm thickness was formed on the slurry surface in 7 days. For the cathode slurry of this Example, the solvent content in the initial slurry was 22.3 wt.%, after one-week storage, the solvent content was 34.0 wt.% in the upper third, 17.5 wt.% - in the middle part, and 15.4 wt.% - in the lower part. There was significant delamination of the cathode slurry preventing its application after 7 days.

It is impossible to obtain a high-quality coating of the current collector with the cathode slurry when trying to produce a cathode with the resultant cathode slurry-see **FIG. 5** (photo on the right). The resultant dispersion without HNBR, and the cathode slurry produced with the use of this dispersion do not allow the necessary technical result.

Example 9 (Comparative).

The dispersion contains 1.2 wt.% of partially hydrogenated nitrile butadiene rubber Therban® 3496 with a content of nitrile units 34 wt.%, with a residual content of polybutadiene units of 18 wt.%, and the content of units obtained by hydrogenation of conjugated diene units 48 wt.% in N-methyl-2-pyrrolidone (NMP). The same hydrogenated nitrile butadiene rubber as the one used for the production of the dispersion of Example 1 was used to produce the solution/dispersion.

The dispersion is characterized by very weak dependence of viscosity (Pa·s) on of shear rate ($s^{-1}$), provided in **FIG. 3** as light triangles (curve 9). For clarity, the solution viscosity values in the curve are multiplied by a factor of 100. The dependence of viscosity on shear rate can be approximated by the Ostwald-de Waele power law in a range from 0.093 $s^{-1}$ to 100 $s^{-1}$. The flow behavior index n is 0.89, and the flow consistency index is 6.1 mPa·$s^{0.89}$. The flow behavior index is very high, i.e., the solution behavior is close to the Newtonian fluid.

From the comparison of dependence of viscosity on the shear rate in the HNBR solution (Comparison Example 9) and the SWCNT dispersion without HNBR (Comparison Example 8) with the dependence of the viscosity on the shear rate of dispersions containing both SWCNTs and HNBR shows the synergistic effect of the simultaneous presence of SWCNTs and HNBR on the dispersion rheology.

Table. Summary of compositions and properties of dispersions of Examples 1-9:

| Ex. # | CNT content, wt.% | HNBR content, wt.% | CNT: HNBR weight ratio | Solvent | G/D ratio | Mod. groups, CNT impurities, wt.% | $D_{hm}$, nm | K, $Pa \cdot s^n$ | n | Viscosity at (1/6.3) $s^{-1}$ Pa·s | Viscosity at 18.6 $s^{-1}$, Pa·s |
|---|---|---|---|---|---|---|---|---|---|---|---|
| 1 | 0.4 | 0.8 | 0.5 | NMP | 80 | Cl: 0.24 Fe: 0.46 | 380 | 22.5 | 0.15 | 105 | 1.9 |
| 2 | 0.4 | 0.6 | 0.67 | NMP | 56 | Fe: 0.4 | 500 | 15.3 | 0.22 | 67 | 1.6 |
| 3 | 0.4 | 0.6 | 0.67 | NMP | 34 | - | N/A | 7.3 | 0.13 | 36 | 0.52 |
| 4 | 0.9 | 0.3 | 3 | DMSO | 80 | Cl: 0.24 Fe: 0.46 | 520 | 21 | 0.16 | 99 | 1.8 |
| 5 | 0.4 | 0.4 | 1 | DMAA | 24 | COOH: 0.62 Fe: 0.006 | 280 | 14.5 | 0.26 | 57 | 1.7 |
| 6 | 0.2 | 2 | 0.1 | ethylene carbonate | 63 | Cl: 0.15 Fe: 0.68 | 380 | 3.4 | 0.03 | 20.3 | 0.2 |
| 7 | 2 | 0.2 | 10 | DMSO + NMP | 46 | Fe: 14.2 | 560 | 12 | 0.37 | 38 | 1.9 |
| 8 (Comp.) | 1.2 | 0 | - | NMP | 80 | Cl: 0.24 Fe: 0.46 | N/A | 6.6 | 0.63 | 13.1 | 2.2 |
| 9 (Comp.) | 0 | 1.2 | 0 | NMP | - | - | - | 0.006 1 | 0.89 | 0.0075 | 0.0044 |

Industrial applicability

This invention can be used to produce dispersions of single-walled and/or double-walled carbon nanotubes and agglomerates thereof in a liquid phase, cathode slurries, and lithium-ion battery cathodes.

**Claims**

1. A dispersion comprising: a solvent wherein most molecules of the solvent are electrically neutral, hydrogenated nitrile butadiene rubber (HNBR), and single-walled and/or double-walled carbon nanotubes, wherein a content of the single-walled and/or double-walled carbon nanotubes ranges from 0.2 to 2 wt.%, and a weight ratio of the single-walled and/or double-walled carbon nanotubes to the HNBR is at least 0.1 and not more than 10.

2. The dispersion of claim 1, wherein the HNBR contains more than 15 wt.% of hydrogenated polybutadiene units.

3. The dispersion of claim 2, wherein the HNBR contains more than 40 wt.% of hydrogenated polybutadiene units and/or less than 1 wt.% of residual polybutadiene units.

4. The dispersion of claim 1, wherein the HNBR contains more than 20 wt.% of acetonitrile units.

5. The dispersion of claim 1, wherein the solvent is an organic solvent with a flash point of at least 70 °C.

6. The dispersion of claim 5, wherein the solvent is an organic solvent which is any ofN-methyl-2-pyrrolidone, ethylene carbonate, dimethyl sulfoxide, dimethylacetamide, or a mixture thereof.

7. The dispersion of claim 1, wherein the single-walled and/or double-walled carbon nanotubes contain at least 0.1 wt.% of functional groups on the surface.

8. The dispersion of claim 7, wherein the single-walled and/or double-walled carbon nanotubes contain at least 0.1 wt.% of chlorine on the surface.

9. The dispersion of claim 7, wherein the single-walled and/or double-walled carbon nanotubes contain at least 0.1 wt.% of carbonyl and/or hydroxyl, and/or carboxyl groups on the surface.

10. The dispersion of claim 1, wherein the single-walled and/or double-walled carbon nanotubes contained therein are agglomerated, and a mode of hydrodynamic diameter distribution of the number of carbon nanotube agglomerates ranges from 100 nm to 1 $\mu$m.

11. The dispersion of claim 10, wherein the mode of hydrodynamic diameter distribution of the number of carbon nanotube agglomerates ranges from 300 nm to 800 nm.

12. The dispersion of claim 10, wherein the hydrodynamic diameter distribution of the number of carbon nanotube agglomerates is **characterized by** more than one mode.

13. The dispersion of claim 12, wherein the hydrodynamic diameter distribution of the number of carbon nanotube agglomerates features a mode at more than 2 $\mu$m.

14. The dispersion of claim 1, wherein the dispersion segregates into a solvent and a highly concentrated gel of single-walled and/or double-walled carbon nanotubes and HNBR at an oscillating shear strain with a frequency of 1 Hz and a relative shear strain amplitude of 100% in the cone-and-plate rheometer cell.

15. The dispersion of claim 1, wherein the dispersion has a ratio of the G/D line intensities in the Raman spectrum with a wavelength of 532 nm of at least 10.

16. The dispersion of claim 15, wherein the dispersion has a ratio of the G/D line intensities in the Raman spectrum with a wavelength of 532 nm of at least 40.

17. The dispersion of claim 16, wherein the dispersion has a ratio of the G/D line intensities in the Raman spectrum with a wavelength of 532 nm of at least 60.

18. The dispersion of claim 17, wherein the dispersion has a ratio of the G/D line intensities in the Raman spectrum with a wavelength of 532 nm of at least 80.

19. The dispersion of claim 1, wherein the single-walled and/or double-walled carbon nanotubes and/or agglomerates thereof contain Group 8-11 metal impurities.

20. The dispersion of claim 19, wherein a content of Group 8-11 metal impurities in single-walled and/or double-walled carbon nanotubes and/or agglomerates thereof is less than 1 wt.%.

21. The dispersion of claim 20, wherein a content of Group 8-11 metal impurities in single-walled and/or double-walled carbon nanotubes and/or agglomerates thereof is less than 0.1 wt.%.

22. The dispersion of claim 1, wherein the dispersion is a pseudoplastic fluid with a flow behavior index n not more than 0.37 and a flow consistency index K of at least 3.2 Pa·s$^n$.

23. The dispersion of claim 1, wherein its dependence of viscosity on shear rate follows Ostwald-de Waele power law, and the flow behavior index n and the flow consistency index K meet the condition $n < 1.25 * \lg(K/(Pa·s^n)) - 0.628$.

24. The dispersion of claim 1, wherein its dependence of viscosity on shear rate follows Ostwald-de Waele power law, and the flow behavior index n and the flow consistency index K meet the condition $n < 1.24 - 0.787 * \lg(K/(Pa·s^n))$.

25. The dispersion of claim 1, wherein the dispersion has a loss modulus of more than 27 Pa at an oscillating shear strain with a frequency of 1 Hz and a relative shear strain amplitude ranging from 5 to 10% in the cone-and-plate rheometer cell, and a phase angle of more than 18° at an oscillating shear strain with a frequency of 1 Hz and a relative shear strain amplitude ranging from 5 to 10% in the cone-and-plate rheometer cell.

26. A method for producing a dispersion containing a solvent with most of the molecules being electrically neutral, 0.2 to 2 wt.% of single-walled and/or double-walled carbon nanotubes, and hydrogenated nitrile butadiene rubber with a weight ratio of single-walled and/or double-walled carbon nanotubes to hydrogenated nitrile butadiene rubber of at least 0.1 and not more than 10, wherein the method comprises a sequence of at least three dispersion stages (D) and at least two resting stages (R), wherein the resting stages (R) alternate between the dispersion stages (D), wherein any of the dispersion stages (D) include (i) mechanical processing of the dispersion at a shear rate of at least 10000 s$^{-1}$ with a specific input energy of at least 10 W·h/kg or (ii) an ultrasonic treatment at a frequency of at least 20 kHz with a specific input energy of at least 1 W·h/kg, and wherein the resting stages (R) expose the dispersion between two successive dispersion stages (D) to a shear rate of less than 10 s$^{-1}$ for at least 1 minute.

27. The method of claim 26, wherein the method comprises a sequence of alternating at least 10 dispersion stages (D) and at least 9 resting stages (R).

28. The method of claim 27, wherein the method comprises a sequence of alternating at least 30 dispersion stages (D) and at least 29 resting stages (R).

29. The method of claim 26, wherein the sequence of alternating stages (D) and (R) is implemented by circulating the dispersion between one or several devices providing the stages of mechanical processing or ultrasonic treatment, and a tank where the dispersion is held and agitated slowly at shear rates of less than 10 s$^{-1}$.

30. The method of claim 29, wherein a dispersion circulation factor during the production is at least 10.

31. The method of claim 30, wherein a dispersion circulation factor during the production is at least 30.

32. The production method of claim 29, wherein the method comprises circulating the dispersion at a circulation rate of 100 to 10000 kg/h between a rotary pulsation device at a shear rate of at least 10000 s$^{-1}$ with a specific input energy of at least 10 Wh/kg, an ultrasonic treatment device with a sonotrode immersed in the dispersion with a frequency of at least 20 kHz with a specific input energy of at least 1 W·h/kg, and the tank where the dispersion is held for at least 1 min and agitated slowly at shear rates of less than 10 s$^{-1}$.

**33.** The production method of claim 29, wherein the method comprises circulating the dispersion at a circulation rate of 100 to 10000 kg/h between a high-pressure homogenizer at a shear rate of at least 10000 $s^{-1}$ and a specific input energy of at least 10 Wh/kg, and a tank where the dispersion is held for at least 1 min and agitated slowly at shear rates of less than 10 $s^{-1}$.

**34.** A method for producing a cathode slurry containing an active material, a solvent, hydrogenated nitrile butadiene rubber, and at least 0.005 wt.% of single-walled and/or double-walled carbon nanotubes, wherein the method comprises the stages of (1) mixing the lithium-containing active material and the dispersion of claim 1, and (2) agitating the resultant mixture to produce a homogeneous slurry.

**35.** The method of claim 34, wherein a solvent and/or one or several binders and/or electrically conductive additives are also added to the mixture at the mixing stage (1).

**36.** The method of claim 34, wherein the method comprises one or several additional stages of mixing with the solvent and/or one or several binders, and/or electrically conductive additives, implemented before stage (2).

**37.** A cathode slurry containing an active material, a solvent, hydrogenated nitrile butadiene rubber, and single-walled and/or double-walled carbon nanotubes, wherein the cathode slurry contains at least 0.005 wt.% of single-walled and/or double-walled carbon nanotubes and it is produced by the method of claim 34.

**38.** The cathode slurry of claim 37, wherein its dynamic viscosity at a shear rate of 1 $s^{-1}$ is at least 10 Pa·s and its dynamic viscosity at a shear rate of 100 $s^{-1}$ is not more than 1 Pa·s.

**39.** The cathode slurry of claim 37, wherein the cathode slurry is a pseudoplastic fluid with a flow behavior index n not more than 0.3 and a flow consistency index K at least 10 Pa·$s^n$.

**40.** The cathode slurry of claim 37, wherein the cathode slurry further contains at least 0.01 wt.% of one or several electrically conductive additives of the following: multi-walled carbon nanotubes, carbon black, graphite, Group 8-11 metals.

**41.** A method for producing a lithium-ion battery cathode, wherein the method comprises a sequence of stages of (1) mixing the lithium-containing active material t and the dispersion of claim 1, (2) agitating the resultant mixture to produce a homogeneous slurry, (3) applying the resultant slurry to the current collector, (4) drying the applied slurry until the cathode is formed, and (5) compacting the cathode to the required density.

**42.** A lithium-ion battery cathode wherein it is produced by the method of claim 41.

Fig. 1

Fig. 2.

26

$\mu = 22{,}5\,\gamma^{-0{,}85}$

$\mu = 15{,}3\,\gamma^{-0{,}78}$

$\mu = 7{,}27\gamma^{-0{,}87}$

$\mu = 6{,}6\,\gamma^{-0{,}37}$

$\mu = 0{,}006\,\gamma^{-0{,}11}$

x 100

Fig. 3.

$\mu = 33{,}1\,\gamma^{-0{,}81}$

$\mu = 17{,}6\,\gamma^{-0{,}84}$

$\mu = 13{,}0\,\gamma^{-0{,}90}$

$\mu = 4{,}7\,\gamma^{-0{,}57}$

Fig. 4.

Fig. 5.

Fig. 6.

Fig. 7.

Fig. 8.

EP 4 386 882 A1

Fig. 9

Fig. 10.

30

**INTERNATIONAL SEARCH REPORT**

| International application No. |
| --- |
| PCT/RU 2022/000170 |

A.   CLASSIFICATION OF SUBJECT MATTER

H01M 4/13 (2010.01)   H01M 4/62 (2006.01)   H01M 10/0525 (2010.01)   C01B 32/158 (2017.01)

According to International Patent Classification (IPC) or to both national classification and IPC

B.   FIELDS SEARCHED

Minimum documentation searched (classification system followed by classification symbols)

H01M 4/00-4/62, 4/04, 4/06, 10/00-10/0525, C01B 32/158

Documentation searched other than minimum documentation to the extent that such documents are included in the fields searched

Electronic data base consulted during the international search (name of data base and, where practicable, search terms used)

PatSearch (RUPTO Internal), USPTO, PAJ, Espacenet, Information Retrieval System of FIPS

C.   DOCUMENTS CONSIDERED TO BE RELEVANT

| Category* | Citation of document, with indication, where appropriate, of the relevant passages | Relevant to claim No. |
| --- | --- | --- |
| D, A | EP 3333946 A1 (LG CHEM, LTD) 13.06.2018, paragraphs [0011]-[0013], [0033], [0072], [0082], [0087], [0095], [0096], [0106]-[0110], [0115]-[0118], [0121], [0135], [0152]-[0153] | 1-42 |
| D, A | WO 2006/112162 A1 (NISSHINBO INDUSTRIES, INC et al.) 26.10.2006, the claims | 1-42 |
| A | RU 2749904 C1 (MSD TEKNOLODZHIS S.A.R.L.) 18.06.2021, the claims | 1-42 |
| A | RU 2717516 C2 (MSD TEKNOLODZHIS S.A.R.L.) 23.03.2020, the claims | 1-42 |
| A | WO 2021/220773 A1 (TOYO INK SC HOLDINGS CO., LTD et al.) 04.11.2021, the claims | 1-42 |

☐   Further documents are listed in the continuation of Box C.          ☐          See patent family annex.

| | |
| --- | --- |
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 01 August 2022 (01.08.2022) | 01 September 2022 (01.09.2022) |

| Name and mailing address of the ISA/ RU | Authorized officer |
| --- | --- |
| | |
| Facsimile No. | Telephone No. |

Form PCT/ISA/210 (second sheet) (July 1998)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006112162 A1
- EP 3333946 B1

- RU 2717516 C2

### Non-patent literature cited in the description

- **A.N.G. PARRA-VASQUEZ ; N. BEHABTU ; M.J. GREEN ; C.L. PINT ; C.C. YOUNG ; J. SCHMIDT ; E. KESSELMAN ; A. GOYAL ; P.M. AJAYAN ; Y. COHEN.** Spontaneous Dissolution of Ultralong Single- and Multiwalled Carbon Nanotubes. *ACS Nano,* 2010, vol. 4 (7), 3969-3978
- **A.N.G. PARRA-VASQUEZ ; J.G. DUQUE ; M.J. GREEN ; M. PASQUALI.** Assessment of length and bundle distribution of dilute single-walled carbon nanotubes by viscosity measurements. *AIChE J.,* 2014, vol. 60, 1499-1508
- **W. OSTWALD.** Ueber die rechnerische Darstellung des Strukturgebietes der Viskositat. *Kolloid-Zeitschrift,* 1929, vol. 47, 176-187

- **N.NAIR ; W.KIM ; R.D. BRAATZ ; M.S. STRANO.** Dynamics of Surfactant-Suspended Single-Walled Carbon Nanotubes in a Centrifugal Field. *Langmuir,* 2008, vol. 24, 1790-1795
- **J. GIGAULT ; I. LE HÉCHO ; S. DUBASCOUX ; M. POTIN-GAUTIER ; G. LESPES.** Single-walled carbon nanotube length determination by asymmetrical-flow field-flow fractionation hyphenated to multi-angle laser-light scattering. *J. Chromatogr. A,* 2010, vol. 1217, 7891-7897
- **M.S. WITTINGHAM ; LITHIUM BATTERIES ; CATHODE MATERIALS.** *Chem.Rev,* 2004, vol. 104, 4271-4301